# EUROPÄISCHE PATENTSCHRIFT

(11) **EP 3 734 724 B1**
(45) Veröffentlichungstag und Bekanntmachung des Hinweises auf die Patenterteilung: **07.06.2023**
(21) Anmeldenummer: 19171866.7
(22) Anmeldetag: 30.04.2019
(51) Int. Cl.: H01M 4/58, H01M 4/587, H01M 4/62, H01M 10/052, H01M 10/0568, H01M 10/0569, H01M 4/02

(54) **WIEDERAUFLADBARE BATTERIEZELLE**
RECHARGEABLE BATTERY CELL
ÉLÉMENT DE BATTERIE RECHARGEABLE

(43) Veröffentlichungstag der Anmeldung: 04.11.2020
(73) Patentinhaber: Innolith Technology AG, 4052 Basel (CH)
(72) Erfinder: Zinck, Laurent, 67470 Mothern (FR); Pszolla, Christian, 76185 Karlsruhe (DE)
(74) Vertreter: LBP Lemcke, Brommer & Partner Patentanwälte mbB

(56) Entgegenhaltungen:
- US-B2- 9 263 745
- K. OKADA ET AL: "High rate capability by sulfur-doping into LiFePO4 matrix", RSC ADVANCES, Bd. 8, Nr. 11, 6. Februar 2018 (2018-02-06), Seiten 5848-5853, XP055635864, DOI: 10.1039/C7RA12740E

## Beschreibung

Die Erfindung betrifft eine wiederaufladbare Batteriezelle mit einem Gehäuse, zumindest einer positiven Elektrode, zumindest einer negativen Elektrode und einem Elektrolyten, der zumindest ein Leitsalz enthält.

Wiederaufladbare Batteriezellen sind auf vielen technischen Gebieten von großer Bedeutung. Vielfach werden sie für Anwendungen eingesetzt, bei denen nur relativ geringe Stromstärken benötigt werden, wie beispielsweise beim Betrieb von Mobiltelefonen. Daneben gibt es aber auch einen großen Bedarf an Batteriezellen für Hochstromanwendungen, wobei eine Massenspeicherung von Energie von besonderer Bedeutung ist.

Eine wichtige Anforderung bei derartigen wiederaufladbaren Batteriezellen ist eine hohe Energiedichte. Das bedeutet, dass die wiederaufladbare Batteriezelle möglichst viel elektrische Energie je Gewichts- und Volumeneinheit enthalten soll. Hierfür hat sich Lithium als aktives Metall als besonders vorteilhaft erwiesen. Als aktives Metall einer wiederaufladbaren Batteriezelle bezeichnet man das Metall, dessen Ionen innerhalb des Elektrolyten beim Laden oder Entladen der wiederaufladbaren Batteriezelle zur negativen oder positiven Elektrode wandern und dort an elektrochemischen Prozessen teilnehmen, die direkt oder indirekt zur Abgabe von Elektronen in den externen Stromkreis oder zur Aufnahme von Elektronen aus dem externen Stromkreis führen. Aufgrund dessen sind wiederaufladbare Batteriezellen in der Praxis nahezu ausschließlich Lithium-Ionen-Zellen. Sowohl die positive als auch die negative Elektrode von Lithium-Ionen-Zellen sind als Insertionselektroden ausgebildet. Unter dem Begriff "Insertionselektrode" im Sinne der vorliegenden Erfindung werden Elektroden verstanden, welche eine Kristallstruktur aufweisen, in die Ionen des aktiven Materials beim Betrieb der wiederaufladbaren Batteriezelle ein- und ausgelagert werden können. Das bedeutet, dass sich die Elektrodenprozesse nicht nur an der Oberfläche der Elektroden, sondern auch innerhalb der Kristallstruktur abspielen können. Die negative Elektrode von Lithium-lonen-Zellen besteht aus einer Kohlenstoffbeschichtung, welche auf ein Ableitelement aus Kupfer aufgetragen ist. Die positive Elektrode besteht aus Lithiumkobaltoxid (LiCoO₂), welches auf ein Ableitelement aus Aluminium aufgetragen ist. Beide Elektroden weisen eine Dicke von in der Regel weniger als 100 µm auf und sind daher sehr dünn ausgebildet. Beim Laden der Lithium-Ionen-Zelle werden die Ionen des aktiven Metalls aus der positiven Elektrode ausgelagert und in die negative Elektrode eingelagert. Beim Entladen der Lithium-Ionen-Zelle läuft der umgekehrte Prozess ab. Der Transport der Ionen zwischen den Elektroden erfolgt mittels des Elektrolyten, der die erforderliche lonenbeweglichkeit gewährleistet. Die aus dem Stand der Technik bekannten Lithium-lonen-Zellen enthalten einen Elektrolyten, der aus einem in einem organischen Lösungsmittel oder Lösungsmittelgemisch gelösten Leitsalz besteht. Bei dem Leitsalz handelt es sich um ein Lithiumsalz wie beispielsweise Lithiumhexafluorophosphat (LiPF₆). Das Lösungsmittelgemisch kann beispielsweise Ethylencarbonat enthalten. Aufgrund des organischen Lösungsmittels oder Lösungsmittelgemischs werden derartige Lithium-Ionen-Zellen auch als "organische Lithium-Ionen-Zellen" bezeichnet.

Problematisch sind organische Lithium-Ionen-Zellen hinsichtlich ihrer Stabilität sowie langfristigen Betriebssicherheit. Sicherheitsrisiken werden insbesondere durch die Brennbarkeit des organischen Lösungsmittels oder Lösungsmittelgemischs verursacht. Wenn eine organische Lithium-Ionen-Zelle Feuer fängt oder sogar explodiert, bildet das organische Lösungsmittel des Elektrolyten ein brennbares Material. Um solche Sicherheitsrisiken zu vermeiden, müssen zusätzliche Maßnahmen getroffen werden. Zu diesen Maßnahmen zählen insbesondere eine sehr exakte Regelung der Lade- und Entladevorgänge der organischen Lithium-Ionen-Zelle sowie eine optimierte Batteriekonstruktion. Weiterhin enthält die organische Lithium-Ionen-Zelle Komponenten, die im Brandfall schmelzen und hierbei die organische Lithium-lonen-Zelle mit geschmolzenem Kunststoff fluten können. Diese Maßnahmen führen jedoch zu erhöhten Produktionskosten bei der Herstellung der organischen Lithium-Ionen-Zelle sowie zu einem erhöhten Volumen und Gewicht. Weiterhin vermindern diese Maßnahmen die Energiedichte der organischen Lithium-Ionen-Zelle.

Die zuvor beschriebenen Probleme im Hinblick auf die Stabilität und die langfristige Betriebssicherheit sind besonders schwerwiegend bei der Entwicklung von organischen Lithium-lonen-Zellen für Hochstromanwendungen.

Eine aus dem Stand der Technik bekannte Weiterentwicklung sieht daher die Verwendung von Elektrolyten auf Schwefeldioxid (SO₂)-Basis für wiederaufladbare Batteriezellen vor. Wiederaufladbare Batteriezellen, welche einen auf SO₂-basierenden Elektrolyten enthalten, weisen unter anderem eine hohe ionische Leitfähigkeit auf. Mit dem Begriff "auf SO₂-basierender Elektrolyt" wird im Rahmen der vorliegenden Erfindung ein Elektrolyt bezeichnet, der SO₂ nicht nur als Zusatz in geringer Konzentration enthält, sondern bei dem die Beweglichkeit der Ionen des Leitsalzes, das in dem Elektrolyten enthalten ist und den Ladungstransport bewirkt, zumindest teilweise, größtenteils oder sogar vollständig durch SO₂ gewährleistet ist.

Die EP 2 534 719 B1 (im Nachfolgenden bezeichnet als [V1]) offenbart beispielsweise eine wiederaufladbare Batteriezelle mit einem Gehäuse, einer positiven Elektrode, einer negativen Elektrode sowie einem Elektrolyten. Der Elektrolyt dieser wiederaufladbaren Batteriezelle basiert auf SO₂ und enthält ein Leitsalz. Ein aktives Material der positiven Elektrode, welches zumindest teilweise für die Energiespeicherung in dieser wiederaufladbaren Batteriezelle verantwortlich ist, besteht aus Lithiumeisenphosphat (LiFePO₄/ LEP). Neben der Nichtbrennbarkeit des Elektrolyten weisen derartige wiederaufladbare Batteriezellen gute elektrische Leistungsdaten hinsichtlich ihrer Strombelastbarkeit sowie der Nutzbarkeit der theoretischen Kapazität der positiven Elektrode auf. Weiterhin zeichnen sie sich durch eine erhöhte Anzahl an möglichen Lade- und Entladezyklen sowie durch eine geringe Selbstentladung aus. Beispielsweise ergaben Halbzellenmessungen mit der positiven Elektrode und dem auf SO₂-basierenden Elektrolyten bei verschiedenen Strombelastungen unter anderem eine Kapazität von ca. 155 mAh/g bei einer Entladestromstärke von 1 C sowie eine Kapazität von ca. 130 mAh/g bei einer Entladestromstärke von 4 C. Mit einer Entladerate von 1C wird definitionsgemäß die Nennkapazität einer Zelle in einer Stunde entladen.

Schwefeldotierte Lithiumeisenphosphate wurden in Lithium-lonen-Zellen mit organischer Elektrolytlösung untersucht. Zum Beispiel in:
"High rate capability by sulfur-doping into LiFePO4 matrix"; K. Okada et al; RSC Adv., 2018, 8, 5848 - 5853 (im Nachfolgenden bezeichnet als [V2]).

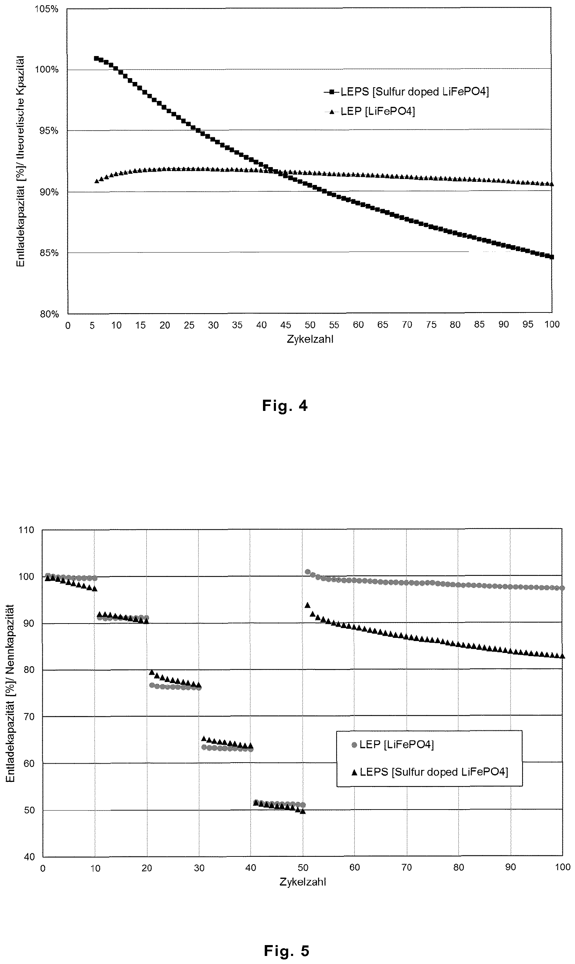

Hier wurden elektrochemische Halbzellen-Messungen bei verschiedenen Entladeraten durchgeführt. Die Halbzellen enthielten einem organischen Elektrolyten der Zusammensetzung 1 M LiPF₆ in Etylencarbonat (EC) : Dimethylcarbonat (DMC) 1:1. Getestet wurden Lithiumeisenphosphat (LEP) Elektroden im Vergleich mit schwefeldotierten Lithiumeisenphosphat Elektroden der Zusammensetzung LFP-S-0,22 (LEPS). Ein besseres Verhalten der schwefeldotierten Elektroden ist zu erkennen. Die Entladekapazität bei einer Entladerate von 5C liegt bei LFP bei 99 mAh/g, die von LFP-S-0,22 bei 121,6 mAh/g (fig. 5a).

Tabelle 1 zeigt eine Zusammenfassung der Messergebnisse der Dokumente [V1] und [V2].

**Tabelle 1: Vergleich der Ergebnisse von [V1] und [V2]**

| | [V1] | [V2] | |
|---|---|---|---|
| Material | LEP | LEP | LEPS |
| Elektrolyt | SO₂-basierender Elektrolyt | organischer Elektrolyt | |
| | LiAlCl₄^{∗}xSO₂ | 1 M LiPF₆ in EC : DMC 1:1 | |
| Kapazitäten [mAh/g] | 155 | 116 | 129 |
| (Entladerate) | (1 C) | (1 C) | (1 C) |
| Kapazitäten [mAh/g] | 130 | 99 | 122 |
| (Entladerate) | (4 C) | (5 C) | (5C) |

Auffällig ist, dass die Kapazitäten der undotierten LEP Elektrode aus Dokument [V1] (SO₂-basierter Elektrolyt) besser sind als die Ergebnisse der schwefeldotierten LEPS Elektroden aus Dokument [V2] (organischer Elektrolyt).

Um die Einsatzmöglichkeiten sowie Eigenschaften von wiederaufladbaren Batteriezellen mit einem auf SO₂-basierenden Elektrolyten weiter zu verbessern, liegt der vorliegenden Erfindung die Aufgabe zugrunde, eine wiederaufladbare Batteriezelle anzugeben, welche gegenüber den aus dem Stand der Technik bekannten wiederaufladbaren Batteriezellen
- verbesserte elektrische Leistungsdaten, insbesondere eine hohe Energiedichte bei gleichzeitig hohen entnehmbaren Strömen (Leistungsdichte),
- eine erhöhte Betriebssicherheit, auch unter den erschwerten Umweltbedingungen in einem Fahrzeug,
- eine gesteigerte Lebensdauer, insbesondere eine hohe Zahl nutzbarer Lade- und Entladezyklen,
- verringerte Produktionskosten im Hinblick auf die notwendigen Ausgangsmaterialien und das Produktionsverfahren sowie
- eine verbesserte Überladefähigkeit und Tiefentladefähigkeit
   aufweist. Derartige wiederaufladbare Batteriezellen sollen insbesondere auch für Hochstromanwendungen geeignet sein. Als Hochstromzellen im Sinne der vorliegenden Erfindung werden wiederaufladbare Batteriezellen bezeichnet, die bei Nennspannung eine Strombelastbarkeit, bezogen auf die Elektrodenfläche (nachfolgend benannt als "flächenspezifische Strombelastbarkeit"), von mindestens 10 mA/cm², vorzugsweise mindestens 50 mA/cm² und besonders bevorzugt mindestens 150 mA/cm² aufweisen.

Gelöst wird diese Aufgabe durch eine wiederaufladbare Batteriezelle mit den Merkmalen des Anspruchs 1. Vorteilhafte Ausgestaltungen und Weiterbildungen sind in den Ansprüchen 2 bis 16 definiert.

Eine erfindungsgemäße wiederaufladbare Batteriezelle umfasst ein Gehäuse, zumindest eine positive Elektrode, zumindest eine negative Elektrode, die durch mindestens einen Separator 11 voneinander getrennt sind, und einen Elektrolyten, der zumindest ein Leitsalz enthält. Der Elektrolyt basiert auf SO₂. Die positive Elektrode enthält ein aktives Material der Zusammensetzung LiₓFe_{y}M"_{z}(PO₄₋ₘSₙ) enthält, worin M" mindestens ein Metall ist, das aus einer Gruppe bestehend aus den Metallen der Gruppen 2, 3, 4, 5, 6, 10, 11, 12, 13, 14, 15 und 16 des Periodensystems ausgewählt ist, x ist größer 0. y ist größer 0. z ist größer oder gleich 0. n ist größer 0. m ist kleiner oder gleich n. Bei S handelt es sich um das Element Schwefel.

Die Suffixe x, y, z, (4-m) und n stehen für die jeweilige Molanzahl der Komponenten Li, Fe, M", P, O und S in der Formel LiₓFe_{y}M"_{z}(PO₄₋ₘSₙ). n gibt die Molanzahl an Schwefelatomen in der zuvor genannten Formal an. m gibt an, um welche Molanzahl die 4 mol Sauerstoffatome verringert werden. Im Fall von n = m muss aufgrund der Ladungsneutralität die negative Ladung des ersetzten Sauerstoffs durch die negativen Ladungen von Schwefel ersetzt werden. Das bedeutet, dass ein Sauerstoff O²⁻ durch ein Schwefel S²⁻ ersetzt wird. Ist n größer als m, darf ein Teil der Schwefelatome keine Ladung besitzen, da sonst die Ladungsneutralität nicht mehr gewahrt wäre. Das bedeutet, dass in diesem Fall sowohl geladene S²⁻-Ionen als auch ungeladene S-Atome in der Verbindung vorliegen.

### Positive Elektrode

Nachfolgend sind vorteilhafte Ausgestaltungen und Weiterbildungen der erfindungsgemäßen wiederaufladbaren Batteriezelle im Hinblick auf die positive Elektrode beschrieben:
Eine erste vorteilhafte Ausgestaltung der erfindungsgemäßen wiederaufladbaren Batteriezelle sieht vor, dass m mindestens einen Wert von 0,001, bevorzugt mindestens einen Wert von 0,005, weiter bevorzugt mindestens einen Wert von 0,01, weiter bevorzugt mindestens einen Wert von 0,05 und besonders bevorzugt mindestens einen Wert von 0,1 annimmt.

Vorzugsweise handelt es sich bei dem aktiven Material der positiven Elektrode also um eine Verbindung der Formel LiFe(PO₄₋ₘSₙ), wobei n größer 0 und m kleiner oder gleich n ist. Beispiele für Verbindungen dieser Formel sind LiPO₄S_{0,025}, LiFePO_{3,95}S_{0,95}LiFePO_{3,975}S_{0,025} oder LiFePO_{3,975}S_{0,05}. Im Nachfolgenden wird eine Verbindung der Formel LiFe(PO₄₋ₘSₙ) auch als schwefeldotiertes Lithiumeisenphosphat (LEPS) bezeichnet.

In diesem Fall ist die wiederaufladbare Batteriezelle als Alkalimetallzelle bzw. als Lithiumzelle ausgebildet. Lithiumzellen mit einem auf SO₂-basierenden Elektrolyten werden im Folgenden als Lithium-SO₂-Zellen bezeichnet (ohne Beschränkung der Allgemeinheit).

In einer weiteren vorteilhaften Ausgestaltung der erfindungsgemäßen wiederaufladbaren Batteriezelle weist die positive Elektrode eine Dicke von mindestens 0,25 mm, bevorzugt mindestens 0,3 mm, weiter bevorzugt mindestens 0,4 mm, weiter bevorzugt mindestens 0,5 mm und besonders bevorzugt mindestens 0,6 mm auf. Somit weist die positive Elektrode eine im Vergleich zu den bei organischen Lithium-Ionen-Zellen verwendeten Elektroden deutlich größere Dicke auf. Mit dieser großen Dicke kann eine höhere flächenspezifische Kapazität erreicht werden. Der Begriff "flächenspezifische Kapazität" bezeichnet die auf die Fläche der positiven Elektrode bezogene Kapazität der positiven Elektrode. Die flächenspezifische Kapazität der positiven Elektrode beträgt vorzugsweise mindestens 5 mAh/cm², wobei folgende Mindestwerte in dieser Reihenfolge noch mehr bevorzugt sind: 7,5 mAh/cm², 10 mAh/cm², 12,5 mAh/cm², 15 mAh/cm², 20 mAh/cm², 25 mAh/cm². Die maximale Dicke der positiven Elektrode sollte 5,0 mm, bevorzugt 3,0 mm und weiter bevorzugt 1,0 mm nicht überschreiten.

Eine weitere vorteilhafte Ausgestaltung der erfindungsgemäßen wiederaufladbaren Batteriezelle sieht vor, dass die positive Elektrode, bezogen auf ihre Fläche, mindestens 30 mg/cm², bevorzugt mindestens 40 mg/cm², weiter bevorzugt mindestens 60 mg/cm², weiter bevorzugt mindestens 80 mg/cm², weiter bevorzugt mindestens 100 mg/cm², weiter bevorzugt mindestens 120 mg/cm², und besonders bevorzugt mindestens 140 mg/cm² aktives Material enthält. Bei der Menge an aktivem Material bezogen auf die Fläche der positiven Elektrode handelt es sich um die Beladung dieser positiven Elektrode. Die maximale Beladung der positiven Elektrode sollte vorzugsweise 1000 mg/cm² nicht überschreiten, weiter bevorzugt 750mg/cm² und besonders bevorzugt 500 mg/cm² und noch weiter bevorzugt 250 mg/cm².

Eine hohe Beladung der positiven Elektrode mit aktivem Material und die damit verbundene hohe flächenspezifische Kapazität ermöglichen es, wiederaufladbare Batteriezellen herzustellen, die bei hoher Gesamtkapazität eine relativ geringe Elektrodenfläche haben. Beispielsweise ist bei einer Beladung einer LEPS-Elektrode mit 100 mg/cm² für eine gewünschte Kapazität von 1 Ah nur noch eine Fläche von 60 cm² erforderlich. Die benötigte Elektrodenfläche ist um einen Faktor 3 kleiner als für die aus dem Stand der Technik bekannten organischen Lithium-lonen-Zellen. Positive Elektroden, welche LiFePO₄ als aktives Material enthalten und in organischen Lithium-lonen-Zellen Anwendung finden, haben eine Dicke von 50 bis 90 µm und eine Flächenbeladung von 4 bis 6 mAh/cm². Demzufolge benötigen sie für die Bereitstellung einer Kapazität von 1 Ah eine Gesamtelektrodenfläche von 170 bis 250 cm².

Durch die verringerte Elektrodenfläche der positiven Elektrode wird auch weniger Fläche an Separator und an negativer Elektrode benötigt. Außerdem ist bei beispielsweise einer prismatischen Zelle mit mehreren Elektroden eine geringere Anzahl an Ableiterfahnen zur Verbindung mit den Zellpolen erforderlich, und die Verschaltung der Elektroden im Gehäuse ist bei einer geringen Elektrodenzahl wesentlich einfacher. Hieraus ergeben sich insbesondere eine leichtere Herstellbarkeit der wiederaufladbaren Batteriezelle sowie verringerte Produktionskosten.

In einer weiteren vorteilhaften Ausgestaltung weist die wiederaufladbare Batteriezelle eine Strombelastbarkeit, bezogen auf die Fläche der positiven Elektrode, von mindestens 10 mA/cm², bevorzugt mindestens 50 mA/cm² und besonders bevorzugt mindestens 150 mA/cm² auf.

Eine weitere vorteilhafte Ausgestaltung der erfindungsgemäßen wiederaufladbaren Batteriezelle sieht vor, dass die positive Elektrode porös ist. Die Porosität beträgt bevorzugt höchstens 50 %, weiter bevorzugt höchstens 45 %, weiter bevorzugt höchstens 40 %, weiter bevorzugt höchstens 35 %, weiter bevorzugt höchstens 30 %, weiter bevorzugt höchstens 20 % und besonders bevorzugt höchstens 10 %. Diese Porosität stellt das Verhältnis von Hohlraumvolumen zu Gesamtvolumen der positiven Elektrode dar, wobei das Hohlraumvolumen von sogenannten Poren bzw. Hohlräumen ausgebildet wird. Die Porosität führt zu einer Vergrößerung der inneren Oberfläche der Elektroden. Weiterhin hat die Porosität einen großen Einfluss auf die Dichte der Elektroden und somit auf ihr Gewicht. Die einzelnen Poren der positiven Elektrode können im Betrieb vorzugsweise vollständig mit dem Elektrolyten gefüllt sein.

In einer weiteren vorteilhaften Ausgestaltung weist die positive Elektrode zumindest ein Ableitelement mit einer dreidimensionalen porösen Metallstruktur, insbesondere in Form eines Metallschaums auf. Das bedeutet, dass die positive Elektrode neben dem aktiven Material auch noch das Ableitelement umfasst. Der Begriff "dreidimensionale poröse Metallstruktur" bezeichnet dabei jede aus Metall bestehende Struktur, die sich nicht nur wie ein dünnes Blech über Länge und Breite der flächigen Elektrode erstreckt, sondern auch über deren Dickendimension. Die dreidimensionale poröse Metallstruktur ist derartig porös, dass das aktive Material der positiven Elektrode in die Poren der Metallstruktur eingearbeitet werden kann. Bei dieser Menge an eingearbeitetem aktivem Material handelt sich um die zuvor beschriebene Beladung der positiven Elektrode. Das Ableitelement dient dazu, den erforderlichen elektronisch leitenden Anschluss des aktiven Materials der positiven Elektrode zu ermöglichen. Hierfür steht das Ableitelement in Kontakt mit dem an der Elektrodenreaktion der positiven Elektrode beteiligten aktiven Material. Ableitelement und aktives Material bilden eine positive Insertionselektrode. Die poröse Metallstruktur kann sich vorzugsweise im Wesentlichen über die gesamte Dicke der positiven Elektrode erstrecken. "Im Wesentlichen" bedeutet, dass sich die poröse Metallstruktur über mindestens 70 %, jedoch vorzugsweise über mindestens etwa 80 % der Dicke der Elektrode erstreckt. Die dreidimensionale poröse Metallstruktur des Ableitelements ermöglicht eine höhere Beladung der positiven Elektrode und verbessert damit den elektronisch leitenden Anschluss des aktiven Materials. Aufgrund dessen führt die dreidimensionale poröse Metallstruktur des Ableitelements zu verbesserten elektrischen Leistungsdaten der wiederaufladbaren Batteriezelle. Es liegt hierbei im Rahmen der Erfindung, dass die dreidimensionale poröse Metallstruktur auch als Metallvlies oder Metallgewebe ausgebildet sein kann.

Eine weitere vorteilhafte Ausgestaltung der erfindungsgemäßen wiederaufladbaren Batteriezelle sieht vor, dass das aktive Material der positiven Elektrode in der porösen Metallstruktur im Wesentlichen homogen verteilt ist. Diese homogene Verteilung verbessert die elektrischen Leistungsdaten der wiederaufladbaren Batteriezelle weiter.

Zur Verbesserung der mechanischen Festigkeit enthält die positive Elektrode in einer weiteren vorteilhaften Ausgestaltung aller Aspekte der Erfindung zumindest ein Bindemittel. Dieses Bindemittel kann ein fluoriertes Bindemittel sein, insbesondere ein Ethylen Tetrafluorethylen (ETFE), ein Polytertrafluorethylen (PTFE), ein Fluorethylen-propylen (FEP), Perfluoralkoxy-Polymere (PFA), ein Polyvinylidenfluorid (PVDF) und/oder ein Terpolymer aus Tetrafluorethylen, Hexafluorpropylen und Vinylidenfluorid (THV). Weiterhin kann das Bindemittel aus einem Polymer ausgebildet sein, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Das Bindemittel kann auch aus einem Polymer ausgebildet sein, das auf monomeren Styrol- und Butadien-Struktureinheiten basiert. Das Bindemittel kann auch ein Bindemittel aus der Gruppe der Carboxyalkylcellulosen und deren Salze sein. Im Rahmen der Erfindung haben sich insbesondere THV und PVDF bewährt. Zumindest eines der zuvor genannten Bindemittel kann in der positiven Elektrode in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 % und besonders bevorzugt höchstens 2 Gew% bezogen auf das Gesamtgewicht der Elektrode vorliegen.

Der Zusatz eines Bindemittels verbessert die Langzeitstabilität und die Lebensdauer der wiederaufladbaren Batteriezelle.

### Negative Elektrode

Nachfolgend sind weitere vorteilhafte Ausgestaltungen und Weiterbildungen der erfindungsgemäßen wiederaufladbaren Batteriezelle im Hinblick auf die negative Elektrode beschrieben.

Bei der negativen Elektrode handelt es sich ebenfalls um eine Insertionselektrode. Sie besteht also aus einem Elektrodenmaterial, in welches die Ionen des aktiven Metalls während des Ladens der wiederaufladbaren Batteriezelle eingelagert und aus welchem die Ionen des aktiven Metalls während des Entladens der wiederaufladbaren Batteriezelle ausgelagert werden können. Wird beispielsweise ein Leitsalz auf Lithium-Basis verwendet, so können Lithiumionen während des Ladens der wiederaufladbaren Batteriezelle in das Elektrodenmaterial eingelagert und während des Entladens der wiederaufladbaren Batteriezelle aus diesem ausgelagert werden.

Eine weitere vorteilhafte Ausgestaltung der erfindungsgemäßen wiederaufladbaren Batteriezelle sieht vor, dass die negative Elektrode ebenfalls porös ist, wobei die Porosität bevorzugt höchstens 50 %, weiter bevorzugt höchstens 45 %, weiter bevorzugt höchstens 40 %, weiter bevorzugt höchstens 35 %, weiter bevorzugt höchstens 30 %, weiter bevorzugt höchstens 20 % und besonders bevorzugt höchstens 10 % beträgt. Diese Porosität führt zu einer Vergrößerung der inneren Oberfläche der negativen Elektrode. Weiterhin verringert die Porosität die Dichte der negativen Elektrode und damit auch ihr Gewicht. Die einzelnen Poren der negativen Elektrode können im Betrieb vorzugsweise vollständig mit dem Elektrolyten gefüllt sein.

Des Weiteren weist die negative Elektrode in einer weiteren vorteilhaften Ausgestaltung der erfindungsgemäßen wiederaufladbaren Batteriezelle zumindest ein Ableitelement mit einer dreidimensionalen porösen Metallstruktur, insbesondere in Form eines Metallschaums auf. Das bedeutet, dass die negative Elektrode neben dem aktiven Material auch noch das Ableitelement umfasst. Wie bereits zuvor erläutert, bezeichnet der Begriff "dreidimensionale poröse Metallstruktur" jede aus Metall bestehende Struktur, die sich nicht nur wie ein dünnes Blech über Länge und Breite der flächigen Elektrode erstreckt, sondern auch über deren Dickendimension. Die dreidimensionale poröse Metallstruktur ist derartig porös, dass das aktive Material der negativen Elektrode in die Poren der Metallstruktur eingearbeitet werden kann. Bei dieser Menge an eingearbeitetem aktivem Material handelt sich um die Beladung der negativen Elektrode. Das Ableitelement der negativen Elektrode dient dazu, den erforderlichen elektronisch leitenden Anschluss des aktiven Materials der negativen Elektrode zu ermöglichen. Hierfür steht das Ableitelement in Kontakt mit dem an der Elektrodenreaktion der negativen Elektrode beteiligten aktiven Material. Ableitelement und aktives Material bilden eine negative Insertionselektrode. Die poröse Metallstruktur kann sich vorzugsweise im Wesentlichen über die gesamte Dicke der negativen Elektrode erstrecken. "Im Wesentlichen" bedeutet, dass sich die poröse Metallstruktur über mindestens 70 %, jedoch vorzugsweise über mindestens etwa 80 % der Dicke der negativen Elektrode erstreckt. Die dreidimensionale poröse Metallstruktur des Ableitelements ermöglicht somit eine höhere Beladung der negativen Elektrode und verbessert damit den elektronisch leitenden Anschluss des aktiven Materials. Aufgrund dessen führt die dreidimensionale poröse Metallstruktur des Ableitelements zu verbesserten elektrischen Leistungsdaten der wiederaufladbaren Batteriezelle. Es liegt hierbei im Rahmen der Erfindung, dass die dreidimensionale poröse Metallstruktur auch als Metallvlies oder Metallgewebe ausgebildet sein kann.

Die negative Elektrode umfasst in einer weiteren vorteilhaften Ausgestaltung der erfindungsgemäßen wiederaufladbaren Batteriezelle Kohlenstoff als aktives Material. Dieser Kohlenstoff kann insbesondere in der Modifikation Graphit vorliegen. Sowohl Kohlenstoff als auch Graphit können aufgrund ihrer Kristallstruktur zur Aufnahme von Ionen des aktiven Metalls während des Ladevorgangs der wiederaufladbaren Batteriezelle dienen. Der Kohlenstoff kann auch in Form von Naturgraphit (Flocken-förmig oder gerundet), synthetischem Graphit (Mesophasen Graphit), graphitierten MesoCarbon MicroBeads (MCMB), mit Kohlenstoff beschichteten Graphiten oder amorphen Kohlenstoff (hard carbon und soft carbon) vorliegen.

Die negative Elektrode umfasst in einer weiteren vorteilhaften Ausgestaltung der erfindungsgemäßen wiederaufladbaren Batteriezelle Lithium-Interkalations-Anodenaktivmaterialien, die keinen Kohlenstoff enthalten, so zum Beispiel Lithium-Titanate (z.B. Li₄Ti₅O₁₂).

Die negative Elektrode umfasst in einer weiteren vorteilhaften Ausgestaltung der erfindungsgemäßen wiederaufladbaren Batteriezelle mit Lithium Legierungsbildende-Anodenaktivmaterialien. Das sind zum Beispiel Lithium speichernde Metalle und Metalllegierungen (Si, Ge, Sn, SnCoₓC_{y}, SnSiₓ,...) und Oxide der Lithium speichernden Metalle und Metalllegierungen (SnOₓ, SiOₓ, oxidische Gläser von Sn, Si,...).

Die negative Elektrode umfasst in einer weiteren vorteilhaften Ausgestaltung der erfindungsgemäßen wiederaufladbaren Batteriezelle Konversions-Anodenaktivmaterialien, wie z.B. Übergangsmetalloxide (MnOₓ, FeOₓ, CoOₓ, NiOₓ, CuOₓ,...) oder Metallhydride (MgH₂, TiH₂, AlH₃, etc.; B-, Al- and Mg-based ternary hydrides).

Die negative Elektrode umfasst in einer weiteren vorteilhaften Ausgestaltung der erfindungsgemäßen wiederaufladbaren Batteriezelle ein Metall, z.B. metallisches Lithium.

Eine weitere vorteilhafte Ausgestaltung der erfindungsgemäßen wiederaufladbaren Batteriezelle sieht vor, dass das aktive Material der negativen Elektrode in der porösen Metallstruktur des Ableitelements der negativen Elektrode im Wesentlichen homogen verteilt ist. Diese homogene Verteilung verbessert die elektrischen Leistungsdaten der wiederaufladbaren Batteriezelle weiter.

In einer weiteren vorteilhaften Ausgestaltung der erfindungsgemäßen wiederaufladbaren Batteriezelle weist die negative Elektrode eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm auf. Auch die Dicke der negativen Elektrode ist somit deutlich größer im Vergleich zu negativen Elektroden, welche bei organischen Lithium-lonen-Zellen Anwendung finden.

Eine weitere vorteilhafte Ausgestaltung der erfindungsgemäßen wiederaufladbaren Batteriezelle sieht vor, dass die Menge des aktiven Materials der negativen Elektrode, also die Beladung der Elektrode, bezogen auf ihre Fläche, mindestens 10 mg/cm², bevorzugt mindestens 20 mg/cm², weiter bevorzugt mindestens 40 mg/cm², weiter bevorzugt mindestens 60 mg/cm², weiter bevorzugt mindestens 80 mg/cm² und besonders bevorzugt mindestens 100 mg/cm² beträgt. Diese Menge an aktivem Material der negativen Elektrode wirkt sich positiv auf den Ladevorgang sowie den Entladevorgang der wiederaufladbaren Batteriezelle aus.

Die flächenspezifische Kapazität der negativen Elektrode kann vorzugsweise mindestens 2,5 mAh/cm² betragen, wobei folgende Werte in dieser Reihenfolge weiter bevorzugt sind: 5 mAh/cm², 10 mAh/cm², 15 mAh/cm², 20 mAh/cm², 25 mAh/cm², 30 mAh/cm².

Zur Verbesserung der mechanischen Festigkeit enthält die negative Elektrode in einer weiteren vorteilhaften Ausgestaltung aller Aspekte der Erfindung zumindest ein Bindemittel. Dieses Bindemittel kann ein fluoriertes Bindemittel sein, insbesondere ein Ethylen Tetrafluorethylen (ETFE), ein Polytertrafluorethylen (PTFE), ein Fluorethylen-propylen (FEP), Perfluoralkoxy-Polymere (PFA), ein Polyvinylidenfluorid (PVDF) und/oder ein Terpolymer aus Tetrafluorethylen, Hexafluorpropylen und Vinylidenfluorid (THV). Weiterhin kann das Bindemittel aus einem Polymer ausgebildet sein, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist. Das Bindemittel kann auch aus einem Polymer ausgebildet sein, das auf monomeren Styrol- und Butadien-Struktureinheiten basiert. Das Bindemittel kann auch ein Bindemittel aus der Gruppe der Carboxyalkylcellulosen und deren Salze sein. Im Rahmen der Erfindung haben sich insbesondere Polymere aus einem Alkalisalz einer konjugierten Carbonsäure bewährt. Zumindest eines der zuvor genannten Bindemittel kann in der negativen Elektrode in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 % und besonders bevorzugt höchstens 2 Gew% bezogen auf das Gesamtgewicht der Elektrode vorliegen. Der Zusatz eines Bindemittels verbessert die Langzeitstabilität und die Lebensdauer der wiederaufladbaren Batteriezelle.

### Auf SO₂-basierender Elektrolyt

Nachfolgend sind vorteilhafte Ausgestaltungen und Weiterbildungen der erfindungsgemäßen wiederaufladbaren Batteriezelle im Hinblick auf den auf SO₂-basierenden Elektrolyten beschrieben.

Die erfindungsgemäße wiederaufladbare Batteriezelle umfasst, wie bereits zuvor beschrieben, einen "auf SO₂-basierenden Elektrolyten". Der Elektrolyt enthält daher SO₂ nicht nur als Zusatz in geringer Konzentration, sondern in Konzentrationen, bei denen die Beweglichkeit der Ionen des Leitsalzes, das in dem Elektrolyten enthalten ist und den Ladungstransport bewirkt, zumindest teilweise, größtenteils oder sogar vollständig durch das SO₂ gewährleistet ist.

Eine weitere vorteilhafte Ausgestaltung der erfindungsgemäßen wiederaufladbaren Batteriezelle sieht vor, dass der Elektrolyt mindestens 1,5 Mol SO₂, 2 Mol SO₂, bevorzugt mindestens 2,5 Mol SO₂, weiter bevorzugt mindestens 3 Mol SO₂ und besonders bevorzugt mindestens 4 Mol SO₂ je Mol Leitsalz enthält. Auf SO₂-basierende Elektrolyte mit einem derartigen Konzentrationsverhältnis zwischen SO₂ und dem Leitsalz haben den Vorteil, dass sie im Vergleich zu aus dem Stand der Technik bekannten Elektrolyten, welche beispielsweise auf einem organischen Lösungsmittelgemisch basieren, eine größere Menge an Leitsalz lösen können. Im Rahmen der Erfindung wurde festgestellt, dass überraschenderweise ein Elektrolyt mit einer relativ geringen Konzentration an Leitsalz trotz des damit verbundenen höheren Dampfdrucks vorteilhaft ist, insbesondere hinsichtlich dessen Stabilität über viele Lade- und Entladezyklen der wiederaufladbaren Batteriezelle.

Es liegt hierbei im Rahmen der Erfindung, dass die Konzentration an SO₂ bevorzugt höchstens 220 Mol SO₂ je Mol Leitsalz, weiter bevorzugt höchstens 200 Mol SO₂, weiter bevorzugt höchstens 100 Mol SO₂, weiter bevorzugt höchstens 50 Mol SO₂, weiter bevorzugt höchstens 30 Mol SO₂, weiter bevorzugt höchstens 25 Mol SO₂ und besonders bevorzugt höchstens 20 Mol SO₂, jeweils je Mol Leitsalz, beträgt. Die Konzentration an SO₂ im Elektrolyten wirkt sich auf dessen Leitfähigkeit aus. Somit kann durch die Wahl der SO₂-Konzentration die Leitfähigkeit des Elektrolyten an die geplante Verwendung der wiederaufladbaren Batteriezelle angepasst werden.

Bevorzugt enthält der Elektrolyt mindestens 20 Gewichtsprozent ("Gew%") SO₂, bezogen auf die Gesamtmenge des in der wiederaufladbaren Batteriezelle enthaltenen Elektrolyten, wobei Werte von 35 Gew% SO₂ , 45 Gew% SO₂ und 55 Gew% SO₂ weiter bevorzugt sind. Der Elektrolyt kann auch bis zu 95 Gew% SO₂ enthalten, wobei Maximalwerte von 75 Gew% SO₂ und 85 Gew% SO₂ in dieser Reihenfolge bevorzugt sind.

Es liegt im Rahmen der Erfindung, dass der Elektrolyt vorzugsweise einen nur geringen oder sogar gar keinen prozentualen Anteil an zumindest einem organischen Stoff oder einem organischen Material aufweist. Vorzugsweise kann der Anteil von organischen Stoffen oder Materialien im Elektrolyten, welche beispielsweise in Form eines oder mehrerer Lösungsmittel oder Zusatzstoffe vorhanden ist, höchstens 50 Gew% des Gewichts des Elektrolyten betragen. Besonders bevorzugt sind geringere Anteile von höchstens 40 Gew%, von höchstens 30 Gew%, von höchstens 20 Gew%, von höchstens 15 Gew%, von höchstens 10 Gew%, von höchstens 5 Gew% oder von höchstens 1 Gew% des Gewichts des Elektrolyten. Weiter bevorzugt ist der Elektrolyt frei von organischen Lösungsmitteln. Durch den nur geringen Anteil an organischen Stoffen oder Materialien oder sogar deren vollständige Abwesenheit ist der Elektrolyt entweder kaum oder gar nicht brennbar. Dies erhöht die Betriebssicherheit einer mit einem derartigen auf SO₂-basierenden Elektrolyten betriebenen wiederaufladbaren Batteriezelle. Weiterhin kann der organische Stoff oder das organische Material vorzugsweise kein Additiv, sondern lediglich eine Verunreinigung sein. Derartige Verunreinigungen können beispielsweise durch eine kohlenstoffhaltige Umhüllung des aktiven Materials der positiven Elektrode oder von anderen kohlenstoffhaltigen Materialien, beispielsweise der negativen Elektrode, verursacht werden. Besonders bevorzugt ist der auf SO₂-basierende Elektrolyt im Wesentlichen frei von organischen Materialien. Der Begriff "im Wesentlichen" ist dahingehend zu verstehen, dass die Menge eventuell vorhandener organischer Stoffe oder Materialien so gering ist, dass sie keinerlei Sicherheitsrisiko darstellen. Dies bedeutet, dass der Elektrolyt vorzugsweise nicht mehr als 500 ppm an organischen Stoffen oder Materialien enthält.

Die elektrochemische Ladungsmenge des in der wiederaufladbaren Batteriezelle enthaltenen SO₂, berechnet mit einem Faraday pro Mol SO₂, ist bevorzugt größer als eine theoretisch in der positiven Elektrode elektrochemisch speicherbare Ladungsmenge des aktiven Metalls.

Eine weitere vorteilhafte Ausgestaltung der erfindungsgemäßen wiederaufladbaren Batteriezelle sieht vor, dass das Leitsalz ein Aluminat, Halogenid, Oxalat, Borat, Phosphat, Arsenat oder Gallat eines Alkalimetalls oder Erdalkalimetalls ist, bevorzugt ein Lithiumtetrahalogenoaluminat, besonders bevorzugt ein Lithiumtetrachloroaluminat. Der Gehalt des Leitsalzes im Elektrolyten kann bevorzugt weniger als 70 Gew% des Gewichts des Elektrolyten betragen, weiter bevorzugt weniger als 60 Gew%, weniger als 50 Gew%, weniger als 40 Gew%, weniger als 30 Gew%, weniger als 20 Gew% oder weniger als 10 Gew%.

Der Gesamtgehalt von SO₂ und Leitsalz kann bevorzugt größer als 50 Gew% des Gewichts des Elektrolyten sein, weiter bevorzugt größer als 60 Gew%, größer als 70 Gew%, größer als 80 Gew%, größer als 85 Gew%, größer als 90 Gew%, größer als 95 Gew% oder größer als 99 Gew%.

### Separator

Es liegt im Rahmen der Erfindung, dass die wiederaufladbare Batteriezelle vorzugsweise einen Separator zur elektrischen Trennung der positiven und der negativen Elektrode aufweist. Dieser Separator kann aus einem Vlies, einer Membran, einem Gewebe, einem Gewirke, einem organischen Material, anorganischen Material oder aus einer Kombination hiervon ausgebildet ist. Organische Separatoren können aus unsubstituierten Polyolefinen (z.B. Polypropylen oder Polyethylen), partiell bis vollständig halogensubstituierten Polyolefinen (z.B. partiell bis ganz fluorsubstituiert; z.B. PVDF, ETFE, PTFE), Polyestern, Polyamiden oder Polysulfonen bestehen. Separatoren, die eine Kombination von organischen und anorganischen Materialien darstellen, sind zum Beispiel Glasfaser-Textilmaterialien, bei denen die Glasfasern mit einer geeigneten polymeren Beschichtung, versehen sind. Die Beschichtung enthält vorzugsweise ein fluorhaltiges Polymer wie Polytetrafluorethylen (PTFE), Ethylen-Tetrafluorethylen (ETFE), Perfluorethylenpropylen (FEP), THV (Terpolymer aus Tetrafluorethylen, Hexafluorpropylen und Vinylidenfluorid) oder ein Perfluoralkoxy-Polymer (PFA) oder sie enthält ein Aminosilan, Polypropylen (PP) oder Polyethylen (PE).

### Aufbau der wiederaufladbaren Batteriezelle

Nachfolgend sind vorteilhafte Ausgestaltungen und Weiterbildungen der erfindungsgemäßen wiederaufladbaren Batteriezelle im Hinblick auf deren Aufbau beschrieben.

Um die Funktion der wiederaufladbaren Batteriezelle weiter zu verbessern, sieht eine weitere vorteilhafte Ausgestaltung der erfindungsgemäßen wiederaufladbaren Batteriezelle vor, dass die wiederaufladbare Batteriezelle mehrere negative Elektroden und mehrere positive Elektroden umfasst, welche alternierend gestapelt in dem Gehäuse angeordnet sind, wobei jede positive oder jede negative Elektroden von einer Umhüllung umhüllt ist.

Eine Umhüllung der positiven Elektrode führt zu einer gleichmäßigeren lonenwanderung und lonenverteilung in der wiederaufladbaren Batteriezelle. Je gleichmäßiger die lonenverteilung, insbesondere in der negativen Elektrode, desto höher die mögliche Beladung des aktiven Materials der Elektrode und infolgedessen die nutzbare Kapazität der wiederaufladbaren Batteriezelle. Gleichzeitig werden Risiken vermieden, die mit einer ungleichmäßigen Beladung und einer daraus resultierenden Abscheidung des aktiven Metalls verbunden sein können. Diese Vorteile wirken sich vor allem aus, wenn die positiven Elektroden der Zelle mit der Umhüllung umhüllt sind.

Die Flächenmaße der Elektroden und der Umhüllung können vorzugsweise solcherart aufeinander abgestimmt sein, dass die Außenabmessungen der Umhüllung der Elektroden und die Außenabmessungen der nicht umhüllten Elektroden mindestens in einer Dimension übereinstimmen.

Die Flächenausdehnung der Umhüllung kann vorzugsweise größer als die Flächenausdehnung der Elektrode sein. In diesem Fall erstreckt sich die Umhüllung über eine Begrenzung der Elektrode hinaus. Zwei die Elektrode beidseitig bedeckende Schichten der Umhüllung können daher am Rand der positiven Elektrode durch eine Randverbindung miteinander verbunden werden.

In einer weiteren vorteilhaften Ausgestaltung der erfindungsgemäßen wiederaufladbaren Batteriezelle weisen die negativen Elektroden eine Umhüllung auf, während die positiven Elektroden keine Umhüllung haben. Die Umhüllung dient als Separator zur elektrischen Trennung der positiven und der negativen Elektrode. Die Umhüllung kann aus einem Vlies, einer Membran, einem Gewebe, einem Gewirke, einem organischen Material, anorganischen Material oder aus einer Kombination hiervon ausgebildet sein. Materialien für die Umhüllung können z.B. die im Kapitel Separator beschriebenen Materialien sein.

Eine erfindungsgemäße wiederaufladbare Batteriezelle hat gegenüber den aus dem Stand der Technik bekannten wiederaufladbaren Batteriezellen, insbesondere gegenüber den organischen Lithium-Ionen-Zellen den Vorteil, dass sie die eingangs genannten Anforderungen erfüllt und somit
- verbesserte elektrische Leistungsdaten,
- eine erhöhte Betriebssicherheit,
- eine gesteigerte Lebensdauer,
- verringerte Produktionskosten sowie
- eine verbesserte Überladefähigkeit und Tiefentladefähigkeit
aufweist.

Im Rahmen der Entwicklung der erfindungsgemäßen wiederaufladbaren Batteriezelle sowie deren vorteilhaften Ausgestaltungen und Weiterbildungen wurden von der Anmelderin Vorversuche durchgeführt, um abschätzen bzw. ermitteln zu können, welches Potential wiederaufladbare Batteriezellen mit einer positiven Elektrode aufweisen würden, die LEPS als aktives Material umfassen. Für diese Vorversuche wurden von der Anmelderin elektrochemische Halbzellenexperimente bei Raumtemperatur sowohl mit einer positiven Elektrode, die LEPS als aktives Material enthält, als auch mit einer positiven Elektrode, welche LiFePO₄ ohne Schwefeldotierung als aktives Material enthält, durchgeführt. Im Nachfolgenden wird der Begriff "LEPS-Elektrode" für eine positive Elektrode verwendet, welche LEPS als aktives Material enthält. Der Begriff "LEP-Elektrode" wird für eine positive Elektrode verwendet, welche LiFePO₄ ohne Schwefeldotierung als aktives Material enthält. Die Halbzellen wiesen somit entweder eine in den auf SO₂-basierenden Elektrolyten getauchte LEPS-Elektrode oder eine LEP-Elektrode sowie eine negative Lithium-Elektrode und eine Lithium-Elektrode als Bezugselektrode auf. Derartige elektrochemische Halbzellenexperimente sind aufgrund ihres einfachen Aufbaus und dem damit verbundenen geringen experimentellen Aufwand Standardexperimente zum Testen der Leistungsdaten von Elektroden. Sie werden daher bei der Entwicklung von wiederaufladbaren Batteriezellen, welche einen deutlich komplexeren Aufbau haben, als allgemein anerkannte Vorversuche verwendet.

Es sollte beispielsweise untersucht werden, ob LEPS-Elektroden in einem auf SO₂-basierenden Elektrolyten stabil sind. Eine problematische Eigenschaft des auf SO₂-basierenden Elektrolyten ist dessen hohe Korrosivität. Im Gegensatz dazu weisen Elektrolyte, welche auf einem organischen Lösungsmittel basieren, eine deutlich geringe oder sogar gar keine Korrosivität auf. Da sowohl die positive als auch die negative Elektrode in der wiederaufladbaren Batteriezelle mit dem Elektrolyten in Kontakt stehen, muss bei der Zusammensetzung der Elektroden auf deren Beständigkeit in dem auf SO₂-basierenden Elektrolyten geachtet werden. Nur wenn LEPS-Elektroden im SO₂-bsierenden Elektrolyten stabil sind, ist eine Langzeitstabilität der wiederaufladbaren Batteriezelle gewährleistet.

Zum anderen ist es allgemein bekannt, dass das Element Schwefel in vielen unterschiedlichen Oxidationsstufen vorliegen kann. Diese sind unterschiedlich stabil und können - je nach Umgebungsbedingungen und Reaktionspartnern - entsprechend leicht ineinander übergehen. An der Oberfläche einer positiven Elektrode, welche LEPS als aktives Material enthält, liegt Schwefel in sehr niedrigen Oxidationsstufen vor. Im Elektrolyten liegt Schwefel in hohen Oxidationsstufen vor. In einem auf SO₂-basierenden Elektrolyten kann es zu einem unerwünschten Angleichen der Oxidationsstufen kommen.

Die elektrochemischen Halbzellenexperimente der Anmelderin ergaben, dass die LEPS-Elektrode eine im Vergleich zu der LEP-Elektrode höhere Nennkapazität von 162 mAh/g nach den ersten Formierungszyklen hat. Die LEP-Elektrode weist lediglich eine Nennkapazität von 148 mAh/g auf. Somit kann eine wiederaufladbare Batteriezelle mit einer LEPS-Elektrode eine größere Menge an elektrischer Ladung speichern. Im weiteren Verlauf zeigte sich jedoch, dass bei der LEPS-Elektrode schon nach wenigen Zyklen ein wesentlich steilerer Kapazitätsabfall stattfand. Dies führte dazu, dass nach ca. 80 Zyklen die Kapazitätslage der LEP-Elektrode erreicht war. Der Vorteil der höheren Nennkapazität einer LEPS-Elektrode ist somit nach nur ca. 80 Zyklen aufgebraucht. Zudem kam es auch nach Erreichen der Kapazitätslage der LEP-Elektrode zu einem weiteren Kapazitätsabfall der LEPS-Elektrode. Somit zeigen LEPS-Elektroden in elektrochemischen Halbzellenexperimenten in einem auf SO₂-basierenden Elektrolyten ein wesentlich schlechteres Zykelverhalten als LEP-Elektroden. Unter dem Begriff "Zykelverhalten " ist das Verhalten der Elektroden bei abwechselnd sowie wiederholt durchgeführten Lade- und Entladevorgängen zu verstehen.

Aufgrund dieses negativen Ergebnisses der LEPS-Elektroden bei den Halbzellenexperimenten wäre aus fachmännischer Sicht eine Standardvorgehensweise gewesen, nach diesen Vorversuchen keine weiterführenden Experimente mit den LEPS-Elektroden durchzuführen, sondern die der Erfindung zugrundeliegende Idee zu verwerfen. Dennoch wurden von der Anmelderin weiterführende Experimente mit einer wiederaufladbaren Batteriezelle, das heißt mit einer Vollzelle durchgeführt. Diese Vollzelle wies mindestens eine positive Elektrode und zwei negativen Elektroden auf, wobei die positive Elektrode entweder eine LEPS-Elektrode oder eine LEP-Elektrode war. Die Elektroden waren durch einen Separator getrennt und in einem Batteriegehäuse angeordnet. Die Vollzelle war weiterhin mit dem auf SO₂-basierenden Elektrolyten gefüllt. Somit handelt es sich bei dieser wiederaufladbaren Batteriezelle bzw. Vollzelle um eine Lithium-SO₂-Zelle. Eine nähere Erläuterung zum Aufbau findet sich in der nachfolgenden Figurenbeschreibung.

Im Rahmen dieser Vollzellen-Experimente wurde überraschenderweise festgestellt, dass - trotz der eher negativen Ergebnisse in Halbzellenexperimenten - verbesserte elektrische Leistungsdaten erzielt werden konnten, wenn man eine LEPS-Elektrode in einer wiederaufladbaren Batteriezelle mit dem auf SO₂-basierenden Elektrolyten einsetzt. Im Vergleich zu einer wiederaufladbaren Batteriezelle, die LEP als aktives Material der positiven Elektrode enthält, wurden mit einer wiederaufladbaren Batteriezelle, die LEPS als aktives Material der positiven Elektrode enthält, nicht vorhersehbare, jedoch deutlich bessere Zykelergebnisse erzielt.

Insbesondere durch die Kombination der zuvor beschriebenen LEPS-Elektrode und des auf SO₂-basierenden Elektrolyten kann eine wiederaufladbare Batteriezelle hergestellt werden, die folgende Verbesserungen aufweist:
- Die theoretische Kapazität der LEPS-Elektrode ist zu mindestens 95 % praktisch nutzbar. Das bedeutet, dass die Lithium-Ionen beim Laden nahezu vollständig aus der positiven Elektrode entnommen und beim Entladen wieder in die positive Elektrode eingelagert werden können. Die praktisch nutzbare Kapazität, also die Nennkapazität, der wiederaufladbaren Batteriezelle ist höher als die einer Batteriezelle mit einer LEP-Elektrode.
- Durch die hohe Nennkapazität der wiederaufladbaren Batteriezelle mit einer LEPS-Elektrode wird deren Lebensdauer verlängert. Das Erreichen der kritischen Entladekapazität (z.B. 60 % der Nennkapazität) ist erst nach mehreren Lade-/Entlade-Zyklen erreicht. Auch hinsichtlich der Abhängigkeit der Kapazität von der Strombelastbarkeit werden erfindungsgemäß bessere Werte erreicht. Mit anderen Worten steht auch bei einer hohen Strombelastung noch ein großer Teil der ursprünglichen Kapazität der Batteriezelle zur Verfügung.
- Der Kapazitätsverlust bei einer Deckschichtbildung im ersten Zyklus beträgt weniger als 10% der theoretischen Kapazität der negativen Elektrode. Es wird eine stabile Deckschicht gebildet, die eine hohe Zahl von Lade- und Entladezyklen ermöglicht.
- Die Strombelastbarkeit ist sehr hoch. LEPS-Elektroden können beispielsweise eine flächenspezifische Strombelastung von 300 mA/cm² zur Verfügung stellen.
- Die für Massenspeicherung erforderliche hohe Zahl von Lade- und Entladezyklen ist möglich. In der experimentellen Erprobung wurden mehr als 10.000 Vollzyklen erreicht.
- Die Selbstentladung der wiederaufladbaren Batteriezelle ist außerordentlich gering. Sie kann deshalb in geladenem Zustand lange Zeit gelagert und ohne erneutes Aufladen sofort verwendet werden.
- Es ist nicht notwendig, in dem aktiven Material der positiven Elektrode einen relativ hohen Anteil an Leitfähigkeitsverbesserer auf der Basis von Kohlenstoff einzusetzen. Vielmehr sind relativ geringe Mengen an Leitfähigkeitsverbesserer ausreichend. Vorzugsweise beträgt der Kohlenstoffgehalt der positiven Elektrode weniger als 10 Gew%, wobei folgende Höchstwerte in dieser Reihenfolge weiter bevorzugt sind: 7 Gew%, 5 Gew%, 2 Gew%.

Weitere vorteilhafte Eigenschaften der Erfindung werden nachfolgend anhand von Figuren, Beispielen und Experimenten näher beschrieben und erläutert.
- Figur 1:: zeigt ein Ausführungsbeispiel einer erfindungsgemäßen wiederaufladbaren Batteriezelle in einer Querschnittsdarstellung;
- Figur 2:: zeigt eine perspektivische Darstellung von einer positiven und zwei negativen Elektroden eines Elektrodenstapels mit einer umhüllten positiven Elektrode;
- Figur 3:: zeigt einen in dem Ausführungsbeispiel gemäß Figur 1 verwendbaren Metallschaum;
- Figur 4:: zeigt die Abhängigkeit der Entladekapazität von der Zykelzahl bei einer LEPS-Elektrode im Vergleich zu einer LEP-Elektrode in einem ersten Halbzellenexperiment;
- Figur 5:: zeigt die Abhängigkeit der Entladekapazität von der Entladerate einer LEPS-Elektrode im Vergleich zu einer LEP-Elektrode in einem zweiten Halbzellenexperiment;
- Figur 6:: zeigt die Abhängigkeit der Entladekapazität von der Zykelzahl bei einer LEPS-Elektrode im Vergleich zu einer LEP-Elektrode in einem ersten Vollzellenexperiment; und
- Figur 7:: zeigt die Abhängigkeit der Entladekapazität von der Zykelzahl bei einer LEPS-Elektrode im Vergleich zu einer LEP-Elektrode in einem zweiten Vollzellenexperiment.

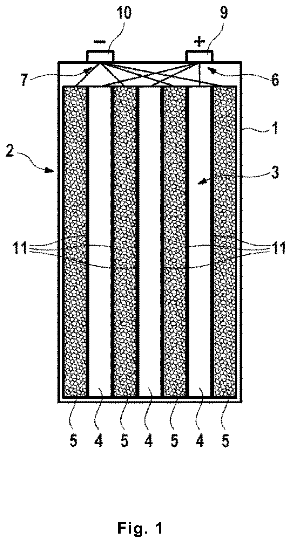

Figur 1 zeigt ein Ausführungsbeispiel einer erfindungsgemäßen wiederaufladbaren Batteriezelle 2 in Querschnittsdarstellung. Diese wiederaufladbare Batteriezelle ist als prismatische Zelle ausgebildet und weist unter anderem ein Gehäuse 1 auf. Dieses Gehäuse 1 umschließt eine Elektrodenanordnung 3, die drei positive Elektroden 4 und vier negative Elektroden 5 umfasst. Die positiven Elektroden 4 und die negativen Elektroden 5 sind in der Elektrodenanordnung 3 alternierend gestapelt angeordnet. Das Gehäuse 1 kann jedoch auch mehr positive Elektroden 4 und/oder negative Elektroden 5 aufnehmen. Generell ist es bevorzugt, wenn die Anzahl der negativen Elektroden 5 um eins größer als die Anzahl der positiven Elektroden 4 ist. Dies hat zur Folge, dass die äußeren Stirnflächen des Elektrodenstapels von den Elektrodenoberflächen der negativen Elektroden 5 gebildet werden. Die Elektroden 4, 5 sind über Elektrodenanschlüsse 6, 7 mit entsprechenden Anschlusskontakten 9, 10 der Batteriezelle verbunden. Die wiederaufladbare Batteriezelle ist derart mit einem auf SO₂-basierenden Elektrolyten gefüllt, dass der Elektrolyt möglichst vollständig in sämtliche Poren bzw. Hohlräume, insbesondere innerhalb der Elektroden 4, 5, eindringt. Der Elektrolyt ist in Figur 1 nicht sichtbar. Im vorliegenden Ausführungsbeispiel sind die drei positiven Elektroden 4 als LEPS-Elektroden ausgebildet. Das bedeutet gemäß dem hier beschriebenen, speziellen Ausführungsbeispiel, dass sie LiF₂PO_{3,975}S_{0,025} als aktives Material aufweisen.

Die Elektroden 4, 5 sind im vorliegenden Ausführungsbeispiel flächig ausgebildet, d.h. als Schichten mit einem im Verhältnis zu ihrer Flächenausdehnung geringen Dicke. Sie sind jeweils durch Separatoren 11 voneinander getrennt. Das Gehäuse 1 der dargestellten Batteriezelle ist im Wesentlichen quaderförmig ausgebildet, wobei sich die Elektroden 4, 5 und die in Schnittdarstellung gezeigten Wände des Gehäuses 1 senkrecht zu der Zeichenebene erstrecken und im Wesentlichen gerade und eben geformt sind. Die wiederaufladbare Batteriezelle kann jedoch auch als Wickelzelle ausgebildet sein. Bei einer Wickelzelle bestehen die Elektroden aus dünnen Lagen, die zusammen mit einem Separatormaterial aufgewickelt werden. Das Separatormaterial trennt die positive Elektrode und die negative Elektrode räumlich und elektrisch, ist jedoch unter anderem für die Ionen des aktiven Metalls durchlässig. Auf diese Weise entstehen große elektrochemisch wirksame Oberflächen, die eine entsprechend hohe Stromausbeute ermöglichen.

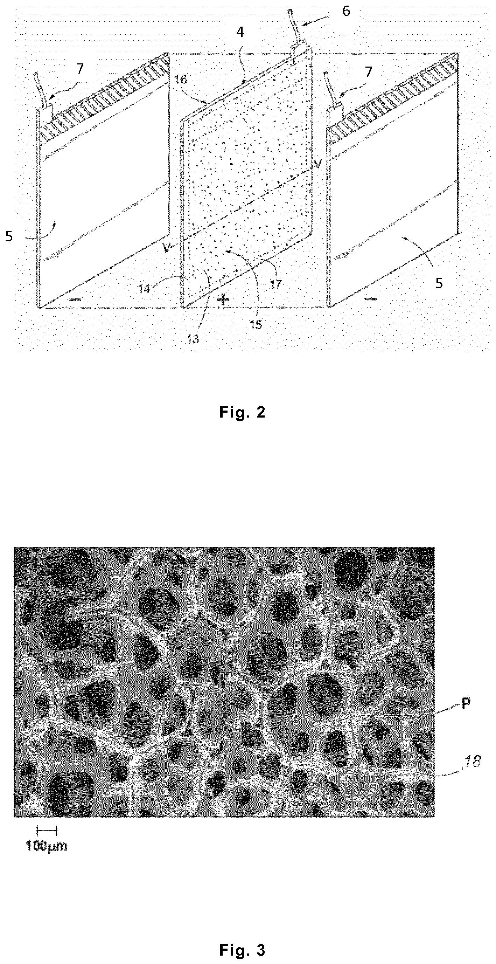

In Figur 2 sind zwei negative Elektroden 5 und eine positive Elektrode 4 dargestellt. Jede der Elektroden hat einen Elektrodenanschlussdraht 6 bzw. 7 zum Anschluss an die entsprechenden Anschlusskontakte 9 bzw. 10 der Zelle. Bei der dargestellten bevorzugten Ausführungsform ist die positive Elektrode 4 (vorzugsweise alle positiven Elektroden 4 der Zelle) von einer Umhüllung 13 umhüllt. Dabei ist die Flächenausdehnung der Umhüllung 13 größer als die Flächenausdehnung der Elektrode 4, deren Begrenzung 14 in Figur 2 als gestrichelte Linie eingezeichnet ist. Zwei die Elektrode 4beidseitig bedeckende Schichten 15 und 16 des Umhüllungsmaterials sind am Rand der Elektrode 4 durch eine Randverbindung 17 miteinander verbunden.

Die Elektroden 4, 5 weisen weiterhin ein Ableitelement auf, welches dazu dient, den erforderlichen elektronisch leitenden Anschluss des aktiven Materials der jeweiligen Elektrode zu ermöglichen. Dieses Ableitelement steht in Kontakt zu dem an der Elektrodenreaktion der jeweiligen Elektrode 4, 5 beteiligten aktiven Material. Das Ableitelement der positiven Elektrode 4 sowie das Ableitelement der negativen Elektrode 5 sind in Form eines porösen Metallschaums ausgebildet. Der Metallschaum erstreckt sich über die Dickendimension der Elektroden 4, 5. Das aktive Material der positiven Elektroden 4 und der negativen Elektroden 5 wurde in die Poren dieses Metallschaum eingearbeitet.

Bei der Herstellung der positiven Elektroden 4 wird LEPS derart in die poröse Struktur des Ableitelementes eingearbeitet, dass es dessen Poren über die gesamte Dicke der Metallstruktur gleichmäßig füllt. Danach wird das so erzeugte Material unter hohem Druck gepresst, wobei die Dicke nach dem Pressvorgang vorzugsweise maximal 50 %, besonders bevorzugt maximal 40 %, der Ausgangsdicke beträgt.

Die positive Elektrode 4 hat eine hohe Beladung mit aktivem Material und ist damit sehr dick. Im dargestellten Fall beträgt die Beladung ca. 14 mAh/cm² und die Dicke d etwa 0,6 mm.

Figur 3 zeigt eine elektronenmikroskopische Aufnahme der dreidimensionalen porösen Struktur des Metallschaums 18. Anhand des angegebenen Maßstabes erkennt man, dass die Poren P im Mittel einen Durchmesser von mehr als 100 µm haben, also verhältnismäßig groß sind.

Der poröse Metallschaum 18 des Ableitelementes erstreckt sich im Wesentlichen über die gesamte Dicke d des Ableitelementes. "Im Wesentlichen" bedeutet, dass sich der poröse Metallschaum 18 über mindestens 70 %, jedoch vorzugsweise über mindestens etwa 80 % der Dicke d der positiven Elektrode 4 erstreckt. Das aktive Material aus LEPS ist in dem poröse Metallschaum 18 im Wesentlichen homogen verteilt, so dass die Zellfunktion durch eventuelle Abweichungen der homogenen Verteilung nur geringfügig beeinträchtigt wird.

Zur Verbesserung der mechanischen Festigkeit enthält die positive Elektrode 4 ein Bindemittel. Bei diesem Bindemittel handelt es sich um THV.

Die negative Elektrode 5 enthält als aktives Material Kohlenstoff in einer als Insertionsmaterial zur Aufnahme von Lithiumionen geeigneten Form. Die Struktur der negativen Elektrode 5 ist ähnlich wie bei der positiven Elektrode 4. Auch bei der negativen Elektrode 5 weist das Ableitelement vorzugsweise eine dreidimensionale poröse Metallstruktur in Form eines Metallschaums auf. Auch die negative Elektrode 5 hat eine verhältnismäßig hohe Beladung mit aktivem Material von mindestens 2,5 mAh/cm² und eine entsprechende Dicke.

### Beispiel 1: Herstellung von LEP-Elektroden als Vergleichselektroden

Die Herstellung der LEP-Elektroden wurde - wie im Nachfolgenenden beschrieben - durchgeführt:
Zunächst wurde aus folgenden Komponenten:

| | |
|---|---|
| ca. 92 - 96 Gew% | Lithiumeisenphosphat (LEP, LiFePO₄) ohne Schwefeldotierung |
| ca. 0 - 4 Gew% | Carbonblack als Leitfähigkeitsvermittler |
| ca. 2 - 6 Gew% | THV als Binder |

eine Paste hergestellt. Hierfür wurde zunächst der Binder in dem Lösungsmittel Aceton gelöst. Danach wurde das Carbonblack unter Rühren zu der Lösung zugegeben. Schließlich wurde LEP im Wechsel mit weiterem Lösungsmittel ebenfalls unter Rühren hinzugefügt. Die hergestellte Paste wurde homogen in einen Metallschaum mit einer Ausgangsporosität von mehr als 90 % eingebracht und eine Stunde bei 50° C getrocknet. Nach dem Abkühlen wurde das Elektrodenmaterial, das heißt das in den Metallschaum homogen eingebrachte LEP mittels eines Kalanders, ausgehend von einer Ausgangsdicke von 1,6 mm, auf eine Dicke von 0,5 mm zusammengepresst. Danach wurde es einem Temperprozess bei 180° C unterzogen. Aus diesem gepressten und getemperten Elektrodenmaterial wurden Stücke mit einer Fläche von 1 cm² ausgestanzt, um die LEP-Elektrode zu erhalten.

Die LEP-Elektroden wurden in den nachfolgend beschriebenen Experimenten als Vergleichselektroden eingesetzt. Sie hatten eine theoretische Kapazität von ca. 14 mAh. Sie wurden in einer Halbzelle mit Drei-Elektroden-Anordnung untersucht, wobei die Bezugs- und die Gegenelektrode jeweils aus metallischem Lithium bestanden. Der in der Halbzelle verwendete Elektrolyt hatte die Zusammensetzung LiAlCl₄ * 1,5 SO₂.

### Beispiel 2: Herstellung von LEPS-Elektroden

Die Herstellung der LEPS-Elektroden erfolgte nach dem in Beispiel 1 beschriebenen Verfahren für die Herstellung der LEP-Elektroden.

Zur Herstellung der Paste wurden jedoch folgende Komponenten verwendet:

| | |
|---|---|
| ca. 92 - 96 Gew% | schwefel-dotiertes Lithiumeisenphosphat (LEPS) |
| ca. 0 - 4Gew% | Carbonblack als Leitfähigkeitsvermittler |
| ca. 2 - 6 Gew% | THV als Binder |

Auch diese LEPS Elektroden mit einer theoretischen Kapazität von 14 mAh wurden in einer Halbzelle mit Drei-Elektroden-Anordnung untersucht, wobei die Bezugs- und Gegenelektrode jeweils aus metallischem Lithium bestand. Der in der Halbzelle verwendete Elektrolyt hatte die Zusammensetzung LiAlCl₄ * 1,5 SO₂.

### Experiment 1: Messung der Abhängigkeit der Entladekapazität von der Zykelzahl bei einer LEPS-Elektrode im Vergleich zu einer LEP-Elektrode in einem Halbzellenexperiment

In einem Halbzellenexperiment wurden mit der in Beispiel 1 hergestellten LEP-Elektrode und der in Beispiel 2 hergestellten LEPS-Elektrode die jeweilige Entladekapazität in Abhängigkeit von der Anzahl der Lade- und Entladezyklen (jeweils mit 1 C) bestimmt. Hierbei sei angemerkt, dass die beiden Halbzellen sich nur in der positiven Elektrode unterschieden. Das bedeutet, dass als positive Elektrode entweder die LEPS-Elektrode oder die LEP-Elektrode eingesetzt wurde.

Figur 4 zeigt die dabei resultierenden Ergebnisse unter Verwendung eines auf SO₂-basierenden Elektrolyten, welcher 1,5 Mol SO₂ je Mol Leitsalz enthielt. Als Leitsalz wurde Lithiumtetrachloroaluminat (LiAlCl₄) verwendet. Bei beiden Elektroden wurden fünf in Figur 4 nicht dargestellte IU-Initialzyklen mit einer Lade-/Entlade-Stromstärke von 10mA in einem Potentialbereich zwischen 3.2 - 3.7 V bis zum Erreichen einer Stromstärke kleiner 1 mA durchgeführt. Diese Initialzyklen dienten zum Bestimmen der Nennkapazität und Bestimmung der Lade- und Entladerate. Bei den IU-Initialzyklen handelt es sich um ein gängiges Lade-/ Entladeverfahren, bei welchem zuerst der Strom I eingestellt wird (Entladerate), bis ein gewisses Potential bzw. eine gewisse Spannung U erreicht ist. Dann wird abgewartet bis der Strom I auf eine vorgegebene Mindestgröße abgesunken ist (kleiner 1 mA). Dieses ist ein gängiges Lade-/ Entladeverfahren.

Danach beginnen 100 IU-Zyklen mit einer Lade- und Entladerate von 1 C in einem Potentialbereich zwischen 3.2 - 3.7 V bis zum Erreichen einer Stromstärke kleiner 1mA.

In Figur 4 ist die Entladekapazität in Prozent der theoretischen Kapazität, die aus der Formelzusammensetzung eines Aktivmaterials berechnet werden kann, über die Anzahl der durchgeführten Lade- und Entladezyklen aufgetragen, wobei die Kurve A die LEP-Elektrode und die Kurve B die LEPS-Elektrode betrifft. Die Messungen wurden bei Raumtemperatur durchgeführt.

Hierbei wurde zunächst festgestellt, dass die LEPS-Elektrode zu Beginn eine höhere Entladekapazität als die LEP-Elektrode hat. Bei beiden Elektroden ist zu Beginn ein leichter Anstieg der Entladekapazität zu erkennen. Danach fällt die Entladekapazität beider Elektroden mit steigender Zykelzahl. Auffällig ist der wesentlich steilere Kapazitätsabfall der LEPS-Elektrode. Nach 45 Zyklen hat die Entladekapazität der LEPS-Elektrode den Wert der LEP-Elektrode erreicht. Der Wert liegt bei 92% der theoretischen Entladekapazität. Nach 100 Zyklen zeigt die LEP-Elektrode noch eine Entladekapazität von 91%. Die Entladekapazität der LEPS-Elektrode ist zu dieser Zeit auf einen Wert von nur noch 84% gesunken. Das bedeutet, dass die LEPS-Elektrode in einem elektrochemischen Halbzellenexperiment mit einem auf SO₂-basierenden Elektrolyten einen starken Kapazitätsabfall im Vergleich zu einer LEP-Elektrode zeigt.

Aufgrund dieser Ergebnisse war nicht zu erwarten, dass dennoch sehr gute Ergebnisse beim Verwenden einer erfindungsgemäßen LEPS-Elektrode in einer Vollzelle, das heißt einer wiederaufladbaren Batteriezelle mit einem auf SO₂-basierenden Elektrolyten erzielt werden könnten.

### Experiment 2: Messung der Abhängigkeit der Entladekapazität von der Entladerate bei einer LEPS-Elektrode im Vergleich zu einer LEP-Elektrode im Halbzellenexperiment

Um die Entladekapazitäten der LEPS-Elektrode und der LEP-Elektrode bei unterschiedlichen Strombelastungen in einem auf SO₂-basierenden Elektrolyten zu bestimmen, wurden in den Halbzellen 100 Lade- und Entladezyklen durchgeführt. Das Laden wurde jeweils mit einer gleichen Laderate von 1 C durchgeführt. Nach jedem Ladevorgang fand ein Entladevorgang statt, wobei die Halbzellen in den 100 Zyklen mit folgenden Raten entladen wurden:
10 Zyklen mit 1 C
je 10 Zyklen mit 2 C, 4 C, 8 C und 10 C,
50 Zyklen mit 1 C.

Die Ladung erfolgte bis zu einer Spannung von 3,7 V. Die Entladung war bei einer Spannung von 3,2 V beendet.

In Figur 5 ist die Entladekapazität in Prozent der Nennkapazität über die Anzahl der durchgeführten Lade- und Entladezyklen aufgetragen, wobei die Kurve A die LEP-Elektrode und die Kurve B die LEPS-Elektrode betrifft. Die Nennkapazität ist diejenige Entladekapazität, die im ersten dargestellten Zyklus von der jeweiligen Elektrode entladen werden konnte. Die Messungen wurden bei Raumtemperatur durchgeführt.

Bei dem ersten Entladezyklus mit 1 C ist ein Abfallen der Entladekapazität der LEPS-Elektrode im Laufe der zehn Zyklen zu erkennen. Bei der Entladung mit 2 C sind die LEPS-Elektrode und die LEP-Elektrode nahezu identisch. Bei 4 C und 6 C Entladestrom startet die LEPS-Elektrode mit höherer Entladekapazität, die sich im Laufe der Zyklen an die Kurve der LEP-Elektrode annähert. Bei 8 C zeigt die LEPS-Elektrode einen steileren Kapazitätsabfall bei gleichem Startwert als die LEP-Elektrode. Nach den 40 Zyklen mit immer höheren Entladeraten wurden weiter 50 Zyklen mit einer Rate von 1 C durchgeführt. Der Startwert der LEPS-Elektrode liegt bei 94% der Nennkapazität und ist damit wesentlich niedriger als der Nennwert der LEP-Elektrode (101%). Nach 100 Zyklen ist der Unterschied zwischen beiden Elektroden noch gravierender. Die LEPS-Elektrode liegt bei 83% der Nennkapazität, die LEP-Vergleichselektrode bei 97% der Nennkapazität.

Daraus lässt sich schließen, dass die LEPS-Elektrode in einem Halbzellenexperiment mit einem auf SO₂-basierenden Elektrolyten keine verbesserte Performance bei höheren Entladeraten im Vergleich zu einer LEP-Elektrode zeigt. Zusätzlich sinkt die Entladekapazität im Fall der LEPS-Elektrode nach den Hochstromentladungen deutlich ab.

Auch aufgrund dieser Ergebnisse war nicht zu erwarten, dass dennoch gute Ergebnisse beim Verwenden einer erfindungsgemäßen LEPS-Elektrode in einer wiederaufladbaren Batteriezelle, das heißt einer Vollzelle mit einem auf SO₂-basierenden Elektrolyten erzielt werden könnten.

### Experiment 3: Messung der Abhängigkeit der Entladekapazität von der Zykelzahl bei einer LEPS-Elektrode im Vergleich zu einer LEP-Elektrode in einem Vollzellenexperiment

Trotz der schlechteren Ergebnisse der LEPS-Elektrode in den zuvor beschriebenen Experimenten 1 und 2 wurden Versuche in Vollzellen durchgeführt. Eine derartige Vollzelle besteht aus positiven Elektroden und negativen Elektroden, die in einem Gehäuse angeordnet sind.

Das Experiment 3 wurde in einer Vollzelle durchgeführt, die zwei negative Elektroden mit einem aktiven Material aus Kohlenstoff, einen auf SO₂-basierenden Elektrolyten mit LiAlCl₄ als Leitsalz sowie entweder einer LEPS-Elektrode oder einer LEP-Elektrode als positive Elektrode aufwies. Die positiven Elektroden hatten eine Beladung mit aktivem Material, also mit LEPS oder LEP, von ca. 90 mg/cm². Die Nennkapazität der Zellen betrug ca. 100 mAh. Die Nennkapazität wird erhalten, indem von der theoretischen Kapazität der positiven Elektrode diejenige Kapazität subtrahiert wird, die im ersten Zyklus für die Bildung einer Deckschicht auf der negativen Elektrode verbraucht wird. Diese Deckschicht wird beim ersten Laden der Vollzelle auf der negativen Elektrode gebildet. Für diese Deckschichtbildung werden Lithiumionen irreversibel verbraucht, sodass der Vollzelle weniger zykelbare Kapazität für die Folgezyklen zur Verfügung steht. Somit unterschieden sich die Zellen nur in der Art des verwendeten aktiven Materials der positiven Elektrode.

Es wurden mehrere Zykelexperimente durchgeführt. Dabei erfolgte das Laden der Vollzellen mit 1 C, entsprechend einem Strom von 0,1 A bis zu einer Ladeschlussspannung von 3,6 Volt und einem Abfall des Ladestromes auf 40 mA. Danach wurden die Vollzellen mit der gleichen Stromstärke bis zum Erreichen eines Potentials von 2,5 V entladen. Zwischen dem Laden und dem Entladen der Vollzellen wurde jeweils eine Pause von zehn Minuten eingelegt.

Die bestimmten Entladekapazitäten werden in Prozent der Nennkapazität ausgedrückt.

In jeder Messung wurden zwei Arten von Vollzellen untersucht, die sich im verwendeten aktiven Material unterschieden. Die gezeigten Kurven zeigen den Mittelwert aus zwei identischen Messungen (für die LEPS-Elektroden) bzw. drei identischen Messungen (LEP-Elektroden).

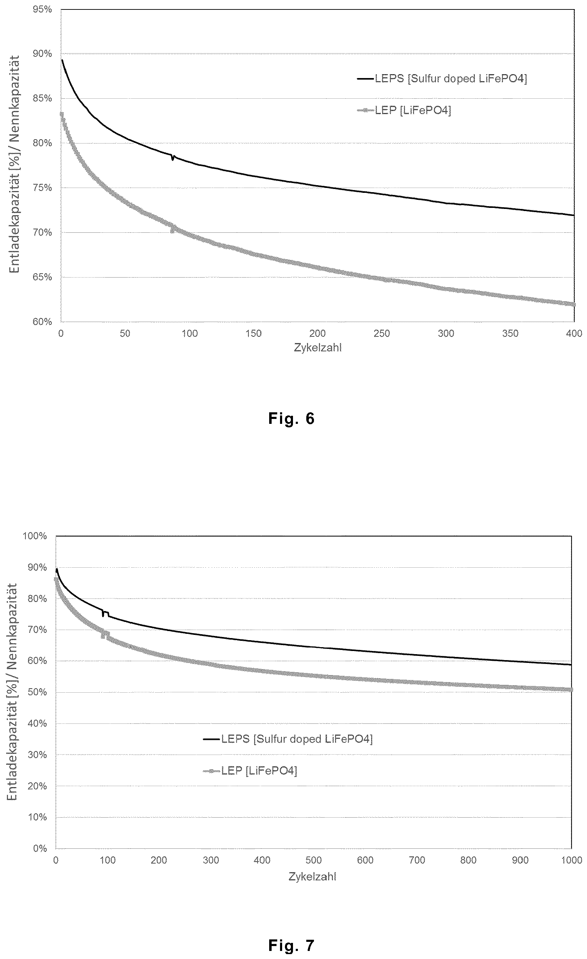

In Figur 6 sind die Ergebnisse dieses Experiments aufgetragen. Der Startwert der Vollzelle mit der LEPS-Elektrode liegt bei ca. 90 % der Nennkapazität. Der Startwert der Vollzelle mit der LEP-Elektrode betrug ca. 83% der Nennkapazität. Beide Elektroden zeigen einen Entladekapazitätsabfall über die Zykelanzahl. Der Kapazitätsabfall für Vollzelle mit LEPS-Elektrode betrug bis zum 400. Zyklus 18% und wies dann eine Restkapazität von 72% auf. Die Vollzelle mit LEP-Elektrode hatte einen Entladekapazitätsabfall von 21% und wies nach 400 Zyklen eine Restkapazität von 62% auf. Die Vollzelle mit LEPS-Elektrode zeigt also überraschenderweise ein stabileres Langzeitverhalten.

Diese Ergebnisse waren unerwartet und überraschend, da die zuvor durchgeführten Halbzellenexperimente ein deutlich anderes Verhalten zeigten.

### Experiment 4: Messung der Abhängigkeit der Entladekapazität von der Zykelzahl bei einer LEPS-Elektrode im Vergleich zu einer LEP-Elektrode in einem Vollzellenexperiment

Nach den sehr guten Ergebnissen in Vollzellen mit drei Elektroden wurden weitere Vollzellen mit elf positiven und zwölf negativen Elektroden untersucht. Die Vollzellen unterschieden sich nur in der Art des verwendeten aktiven Materials der positiven Elektrode.

Die negativen Elektroden enthielten ein aktives Material aus Kohlenstoff, der Elektrolyt bestand aus einem auf 4,5 × SO₂ basierenden Elektrolyten mit LiAlCl₄ als Leitsalz (LiAlCl₄ × 4,5 SO₂). Die positiven Elektroden enthielten entweder LEPS oder LEP als aktives Material. Die Beladung der positiven Elektroden mit aktivem Material betrug ca. 90 mg/cm². Die Nennkapazität der Zellen betrug ca. 1000 mAh.

Es wurden mehrere Zykelexperimente durchgeführt. Dabei erfolgte das Laden der Zellen mit 1 C, entsprechend einem Strom von 0,1 A bis zu einer Ladeschlussspannung von 3,6 Volt und einem Abfall des Ladestromes auf 20 mA. Danach wurden die Zellen mit der gleichen Stromstärke bis zum Erreichen eines Potentials von 2,5 V entladen. Zwischen dem Laden und dem Entladen wurde jeweils eine Pause von zehn Minuten eingelegt.

Die bestimmten Entladekapazitäten werden in % der Nennkapazität ausgedrückt. Die Nennkapazität wird erhalten, indem von der theoretischen Kapazität der positiven Elektrode die Kapazität subtrahiert wird, die im ersten Zyklus für die Deckschichtbildung auf der negativen Elektrode verbraucht wird.

In Figur 7 sind die Ergebnisse des Experiments aufgetragen. Die gezeigten Kurven sind jeweils der Mittelwert aus Messungen mit acht identischen Vollzellen mit LEPS-Elektroden bzw. vier identischen Vollzellen mit LEP-Elektroden. Der Startwert der Vollzelle mit LEPS-Elektroden lag bei ca. 89 % der Nennkapazität. Der Startwert der Vollzelle mit LEP-Elektroden lag bei ca. 86% der Nennkapazität. Beide Elektroden zeigen einen Kapazitätsabfall der Entladekapazität über die Zykelanzahl. Der Kapazitätsabfall im Falle der Vollzelle mit LEPS-Elektroden beträgt bis zum 500. Zyklus 24% und bis zum 1000. Zyklus 30% der Nennkapazität. Die Entladekapazität liegt dann bei 59% der Nennkapazität. Die Vollzelle mit LEPS-Elektroden hat einen Abfall von 31% (500. Zyklus) bzw. 35% (1000. Zyklus) und liegt am Ende dann bei 51% der Nennkapazität. Auch die mit einer Vielzahl an LEPS-Elektroden bestückten Batteriezellen zeigen demnach ein stabileres Langzeitverhalten.

## Patentansprüche

1. Wiederaufladbare Batteriezelle mit einem Gehäuse (1), zumindest einer positiven Elektrode (4), zumindest einer negativen Elektrode (5), die durch mindestens einen Separator 11 voneinander getrennt sind, und einem Elektrolyten, der zumindest ein Leitsalz enthält,
welcher Elektrolyt auf SO₂ basiert und
welche positive Elektrode ein aktives Material der Zusammensetzung LiₓFe_{y}M"_{z}(PO₄₋ₘSₙ) enthält, worin
M" mindestens ein Metall ist, das aus einer Gruppe bestehend aus den Metallen der Gruppen 2, 3, 4, 5, 6, 10, 11, 12, 13, 14, 15 und 16 des Periodensystems ausgewählt ist,
x größer 0 ist,
y größer 0 ist,
z größer oder gleich 0 ist,
n größer 0 ist und
m kleiner oder gleich n ist.

2. Wiederaufladbare Batteriezelle nach Anspruch 1,
**dadurch gekennzeichnet,**
**dass** m mindestens einen Wert von 0,001, bevorzugt mindestens einen Wert von 0,005, weiter bevorzugt mindestens einen Wert von 0,01, weiter bevorzugt mindestens einen Wert von 0,05 und besonders bevorzugt mindestens einen Wert von 0,1 annimmt.

3. Wiederaufladbare Batteriezelle nach einem der Ansprüche 1 bis 2,
**dadurch gekennzeichnet,**
**dass** die positive Elektrode (4) eine Dicke von mindestens 0,25 mm, bevorzugt mindestens 0,3 mm, weiter bevorzugt mindestens 0,4 mm, weiter bevorzugt mindestens 0,5 mm und besonders bevorzugt mindestens 0,6 mm aufweist.

4. Wiederaufladbare Batteriezelle nach einem der Ansprüche 1 bis 3,
**dadurch gekennzeichnet,**
**dass** die positive Elektrode (4), bezogen auf ihre Fläche, mindestens 30 mg/cm², bevorzugt mindestens 40 mg/cm², weiter bevorzugt mindestens 60 mg/cm², weiter bevorzugt mindestens 80 mg/cm², weiter bevorzugt mindestens 100 mg/cm², weiter bevorzugt mindestens 120 mg/cm² und besonders bevorzugt mindestens 140 mg/cm² aktives Material enthält.

5. Wiederaufladbare Batteriezelle nach einem der Ansprüche 1 bis 4,
**gekennzeichnet durch**
eine Strombelastbarkeit bezogen auf die Fläche der positiven Elektrode (4) von mindestens 10 mA/cm², bevorzugt mindestens 50 mA/cm² und besonders bevorzugt mindestens 150 mA/cm².

6. Wiederaufladbare Batteriezelle nach einem der Ansprüche 1 bis 5,
**dadurch gekennzeichnet,**
**dass** die positive Elektrode (4) und/oder die negative Elektrode (5) porös ist/sind, wobei eine Porosität der positiven Elektrode bevorzugt höchstens 50 %, weiter bevorzugt höchstens 45 %, weiter bevorzugt höchstens 40 %, weiter bevorzugt höchstens 35 %, weiter bevorzugt höchstens 30 %, weiter bevorzugt höchstens 20 % und besonders bevorzugt höchstens 10 % beträgt.

7. Wiederaufladbare Batteriezelle nach einem der Ansprüche 1 bis 6,
**dadurch gekennzeichnet,**
**dass** die positive Elektrode (4) und/oder die negative Elektrode (5) ein Ableitelement mit einer dreidimensionalen porösen Metallstruktur, insbesondere in Form eines Metallschaums, aufweist/aufweisen, wobei sich die poröse Metallstruktur vorzugsweise im Wesentlichen über die gesamte Dicke (d) der positiven Elektrode (4) und/oder der negativen Elektrode (5) erstreckt.

8. Wiederaufladbare Batteriezelle nach Anspruch 7,
**dadurch gekennzeichnet,**
**dass** das aktive Material der positiven Elektrode (4) und/oder der negativen Elektrode (5) in der porösen Metallstruktur im Wesentlichen homogen verteilt ist.

9. Wiederaufladbare Batteriezelle nach einem der Ansprüche 1 bis 8,
**dadurch gekennzeichnet, dass** die positive Elektrode (4) und/oder die negative Elektrode (5) ein Bindemittel, vorzugsweise ein fluoriertes Bindemittel, insbesondere ein Polyvinylidenfluorid und/oder ein Terpolymer aus Tetrafluorethylen, Hexafluorpropylen und Vinylidenfluorid,
oder ein Bindemittel, welches aus einem Polymer besteht, das aus monomeren Struktureinheiten einer konjugierten Carbonsäure oder aus dem Alkali-, Erdalkali- oder Ammoniumsalz dieser konjugierten Carbonsäure oder aus einer Kombination daraus aufgebaut ist,
oder ein Bindemittel, welches aus einem Polymer besteht, das auf monomeren Styrol- und Butadien-Struktureinheiten basiert,
oder ein Bindemittel aus der Gruppe der Carboxymethylcellulosen enthält, wobei das Bindemittel vorzugsweise in einer Konzentration von höchstens 20 Gew%, weiter bevorzugt höchstens 15 Gew%, weiter bevorzugt höchstens 10 Gew%, weiter bevorzugt höchstens 7 Gew%, weiter bevorzugt höchstens 5 % und besonders bevorzugt höchstens 2 Gew% bezogen auf das Gesamtgewicht der Elektrode vorliegt.

10. Wiederaufladbare Batteriezelle nach einem der Ansprüche 1 bis 9,
**dadurch gekennzeichnet,**
**dass** die negative Elektrode (5) als aktives Material Kohlenstoff enthält, insbesondere Kohlenstoff in der Modifikation Graphit.

11. Wiederaufladbare Batteriezelle nach einem der Ansprüche 1 bis 10,
**dadurch gekennzeichnet,**
**dass** die negative Elektrode (5) eine Dicke von mindestens 0,2 mm, bevorzugt mindestens 0,3 mm, weiter bevorzugt mindestens 0,4 mm, weiter bevorzugt mindestens 0,5 mm und besonders bevorzugt mindestens 0,6 mm aufweist.

12. Wiederaufladbare Batteriezelle nach einem der Ansprüche 1 bis 11,
**dadurch gekennzeichnet,**
**dass** eine Menge des aktiven Materials der negativen Elektrode (5), bezogen auf ihre Fläche, mindestens 10 mg/cm², bevorzugt mindestens 20 mg/cm², weiter bevorzugt mindestens 40 mg/cm², weiter bevorzugt mindestens 60 mg/cm², weiter bevorzugt mindestens 80 mg/cm² und besonders bevorzugt mindestens 100 mg/cm² beträgt.

13. Wiederaufladbare Batteriezelle nach einem der Ansprüche 1 bis 12,
**dadurch gekennzeichnet,**
**dass** der Schwefeldioxid-basierende Elektrolyt mindestens 1,5 Mol SO₂, 2 Mol SO₂, bevorzugt mindestens 2,5 Mol SO₂, weiter bevorzugt mindestens 3 Mol SO₂ und besonders bevorzugt mindestens 4 Mol SO₂ je Mol Leitsalz enthält.

14. Wiederaufladbare Batteriezelle nach einem der Ansprüche 1 bis 13,
**dadurch gekennzeichnet,**
**dass** das Leitsalz ein Aluminat, ein Halogenid, ein Oxalat, ein Borat, ein Phosphat, ein Arsenat oder ein Gallat eines Alkalimetalls oder eines Erdalkalimetalls ist, bevorzugt ein Lithiumtetrahalogenoaluminat, besonders bevorzugt ein Lithiumtetrachloroaluminat.

15. Wiederaufladbare Batteriezelle nach einem der Ansprüche 1 bis 14,
**dadurch gekennzeichnet,**
**dass** die wiederaufladbare Batteriezelle mehrere negative Elektroden (5) und mehrere positive Elektroden (4) umfasst, welche alternierend gestapelt in dem Gehäuse (1) angeordnet sind, wobei jede positive Elektrode (4) von einer Umhüllung umhüllt ist.

## Claims

1. A rechargeable battery cell having a housing (1), at least one positive electrode (4), at least one negative electrode (5), which are separated for each other by separators 11, and an electrolyte comprising at least one conducting salt,
which electrolyte is based on SO₂ and
which positive electrode comprises an active material of the composition LiₓFe_{y}M"_{z}(PO₄₋ₘSₙ),
M" being at least one metal selected from a group consisting of the metals of groups 2, 3, 4, 5, 6, 10, 11, 12, 13, 14, 15 and 16 of the periodic table,
x being greater than 0,
y being greater than 0,
z being greater than or equal to 0,
n being greater than 0 and
m being less than or equal to n.

2. The rechargeable battery cell according to claim 1,
**characterized in that**
m assumes at least a value of 0.001, preferably at least a value of 0.005, more preferably at least a value of 0.01, more preferably at least a value of 0.05 and most preferably at least a value of 0.1.

3. The rechargeable battery cell according to any of claims 1 to 2,
**characterized in that**
the positive electrode (4) has a thickness of at least 0.25 mm, preferably at least 0.3 mm, more preferably at least 0.4 mm, more preferably at least 0.5 mm and most preferably at least 0.6 mm.

4. The rechargeable battery cell according to any of claims 1 to 3,
**characterized in that**
the positive electrode (4), based on its area, comprises at least 30 mg/cm², preferably at least 40 mg/cm², more preferably at least 60 mg/cm², more preferably at least 80 mg/cm², more preferably at least 100 mg/cm², more preferably at least 120 mg/cm² and most preferably at least 140 mg/cm² of the active material.

5. The rechargeable battery cell according to any of claims 1 to 4,
**characterized by**
a current-carrying capacity based on the area of the positive electrode (4) of at least 10 mA/cm², preferably at least 50 mA/cm² and particularly preferably at least 150 mA/cm².

6. The rechargeable battery cell according to any of claims 1 to 5,
**characterized in that**
the positive electrode (4) and/or the negative electrode (5) is/are porous, wherein a porosity of the positive electrode is preferably at most 50%, more preferably at most 45%, more preferably at most 40%, more preferably at most 35%, more preferably at most 30%, more preferably at most 20% and most preferably at most 10%.

7. The rechargeable battery cell according to any of claims 1 to 6,
**characterized in that**
the positive electrode (4) and/or the negative electrode (5) has/have a discharge element having a three-dimensional porous metal structure, in particular in the form of a metal foam, wherein the porous metal structure preferably extends essentially over the entire thickness (d) of the positive electrode (4) and/or the negative electrode (5).

8. The rechargeable battery cell according to claim 7,
**characterized in that**
the active material of the positive electrode (4) and/or the negative electrode (5) is distributed essentially homogeneously in the porous metal structure.

9. The rechargeable battery cell according to any of claims 1 to 8, **characterized in that** the positive electrode (4) and/or the negative electrode (5) comprises a binder, preferably a fluorinated binder, in particular a polyvinylidene fluoride and/or a terpolymer made of tetrafluoroethylene, hexafluoropropylene and vinylidene fluoride,
or a binder consisting of a polymer which is built up from monomeric structural units of a conjugated carboxylic acid or from the alkali, alkaline earth or ammonium salt of said conjugated carboxylic acid or from a combination thereof,
or a binder consisting of a polymer based on monomeric styrene and butadiene structural units,
or a binder from the group of carboxymethyl celluloses,
wherein the binder is preferably present in a concentration of at most 20% by weight, more preferably at most 15% by weight, more preferably at most 10% by weight, more preferably at most 7% by weight, more preferably at most 5% by weight and most preferably at most 2% by weight based on the total weight of the electrode.

10. The rechargeable battery cell according to any of claims 1 to 9,
**characterized in that**
the negative electrode (5) comprises carbon as the active material, in particular carbon as the allotrope graphite.

11. The rechargeable battery cell according to any of claims 1 to 10,
**characterized in that**
the negative electrode (5) has a thickness of at least 0.2 mm, preferably at least 0.3 mm, more preferably at least 0.4 mm, more preferably at least 0.5 mm and most preferably at least 0.6 mm.

12. The rechargeable battery cell according to any of claims 1 to 11,
**characterized in that**
an amount of the active material of the negative electrode (5), based on its area, is at least 10 mg/cm², preferably at least 20 mg/cm², more preferably at least 40 mg/cm², more preferably at least 60 mg/cm², more preferably at least 80 mg/cm² and most preferably at least 100 mg/cm².

13. The rechargeable battery cell according to any of claims 1 to 12,
**characterized in that**
the sulfur dioxide-based electrolyte comprises at least 1.5 mol SO₂, 2 mol SO₂, preferably at least 2.5 mol SO₂, more preferably at least 3 mol SO₂ and most preferably at least 4 mol SO₂ per mole of conducting salt.

14. The rechargeable battery cell according to any of claims 1 to 13,
**characterized in that**
the conducting salt is an aluminate, a halide, an oxalate, a borate, a phosphate, an arsenate or a gallate of an alkali metal or an alkaline earth metal, preferably a lithium tetrahaloaluminate, particularly preferably a lithium tetrachloroaluminate.

15. The rechargeable battery cell according to any of claims 1 to 14,
**characterized in that**
the rechargeable battery cell comprises a plurality of negative electrodes (5) and a plurality of positive electrodes (4) which are stacked alternately in the housing (1), wherein each positive electrode (4) is enveloped by a sheath.

## Revendications

1. Cellule de batterie rechargeable comprenant un boîtier (1), au moins une électrode positive (4), au moins une électrode négative (5), qui sont séparées l'une de l'autre par au moins un séparateur 11, et un électrolyte qui contient au moins un sel conducteur,
lequel électrolyte est à base de SO₂,
laquelle électrode positive contient un matériau actif de composition LiₓFe_{y}M"_{z}(PO₄₋ₘSₙ), dans laquelle
M" est au moins un métal qui est choisi dans un groupe constitué des métaux des groupes 2, 3, 4, 5, 6, 10, 11, 12, 13, 14, 15 et 16 du système périodique,
x est supérieur à 0,
y est supérieur à 0,
z est supérieur ou égal à 0,
n est supérieur à 0 et
m est inférieur ou égal à n.

2. Cellule de batterie rechargeable selon la revendication 1,
**caractérisée en ce que**
m prend au moins une valeur de 0,001, de manière préférée au moins une valeur de 0,005, de manière plus préférée au moins une valeur de 0,01, de manière plus préférée au moins une valeur de 0,05 et de manière particulièrement préférée au moins une valeur de 0,1.

3. Cellule de batterie rechargeable selon l'une des revendications 1 à 2,
**caractérisée en ce que**
l'électrode positive (4) présente une épaisseur d'au moins 0,25 mm, de manière préférée d'au moins 0,3 mm, de manière plus préférée d'au moins 0,4 mm, de manière plus préférée d'au moins 0,5 mm et de manière particulièrement préférée d'au moins 0,6 mm.

4. Cellule de batterie rechargeable selon l'une des revendications 1 à 3,
**caractérisée en ce que**
rapporté à sa surface, l'électrode positive (4) contient au moins 30 mg/cm², de manière préférée au moins 40 mg/cm², de manière plus préférée au moins 60 mg/cm², de manière plus préférée au moins 80 mg/cm², de manière particulièrement préférée au moins 100 mg/cm², de manière plus préférée au moins 120 mg/cm² et de manière particulièrement préférée au moins 140 mg/cm² de matériau actif.

5. Cellule de batterie rechargeable selon l'une des revendications 1 à 4,
**caractérisée par**
une intensité maximale admissible, rapportée à la surface de l'électrode positive (4), d'au moins 10 mA/cm², de manière préférée d'au moins 50 mA/cm², et de manière particulièrement préférée 150 mA/cm².

6. Cellule de batterie rechargeable selon l'une des revendications 1 à 5,
**caractérisée en ce que**
l'électrode positive (4) et/ou l'électrode négative (5) sont poreuses, dans laquelle une porosité de l'électrode positive est de manière préférée de 50 % au maximum, de manière plus préférée de 45 % au maximum, de manière plus préférée de 40 % au maximum, de manière plus préférée de 35 % au maximum, de manière plus préférée de 30 % au maximum, de manière plus préférée de 20 % au maximum et de manière particulièrement préférée de 10 % au maximum.

7. Cellule de batterie rechargeable selon l'une des revendications 1 à 6,
**caractérisée en ce que**
l'électrode positive (4) et/ou l'électrode négative (5) présentent un élément d'évacuation à structure métallique poreuse tridimensionnelle, en particulier sous forme de mousse métallique, la structure métallique poreuse s'étendant de préférence sensiblement sur toute l'épaisseur (d) de l'électrode positive (4) et/ou de l'électrode négative (5).

8. Cellule de batterie rechargeable selon la revendication 7,
**caractérisée en ce que**
le matériau actif de l'électrode positive (4) et/ou de l'électrode négative (5) dans la structure métallique poreuse est sensiblement homogène.

9. Cellule de batterie rechargeable selon l'une des revendications 1 à 8,
**caractérisée en ce que**
l'électrode positive (4) et/ou l'électrode négative (5) contient un liant, de préférence un liant fluoré, en particulier un polyvinylidènefluorure et/ou un terpolymère constitué de tétrafluoroéthylène, d'hexafluoropropylène et de vinylidènefluorure, ou un liant qui est constitué d'un polymère qui est construit à partir d'unités de structure monomères d'un acide carboxylique conjugué ou à partir du sel alcalin, alcalino-terreux ou d'ammonium de cet acide carboxylique conjugué ou à partir d'une combinaison de ceux-ci,
ou un liant qui est constitué d'un polymère qui est à base d'unités de structure monomères styrol et butadiène,
ou un liant du groupe des carboxyméthylcelluloses,
le liant étant présent de préférence dans une concentration de 20 % en poids au maximum, de manière plus préférée de 15 % en poids au maximum, de manière plus préférée de 10 % en poids au maximum, de manière plus préférée de 7 % en poids au maximum, de manière plus préférée de 5 % au maximum et de manière particulièrement préférée de 2 % en poids au maximum par rapport au poids total de l'électrode.

10. Cellule de batterie rechargeable selon l'une des revendications 1 à 9,
**caractérisée en ce que**
l'électrode négative (5) contient du carbone en tant que matériau actif, en particulier du carbone dans la modification graphite.

11. Cellule de batterie rechargeable selon l'une des revendications 1 à 10,
**caractérisée en ce que**
l'électrode négative (5) présente une épaisseur d'au moins 0,2 mm, de manière préférée d'au moins 0,3 mm, de manière plus préférée d'au moins 0,4 mm, de manière plus préférée d'au moins 0,5 mm et de manière particulièrement préférée d'au moins 0,6 mm.

12. Cellule de batterie rechargeable selon l'une des revendications 1 à 11,
**caractérisée en ce que**
une quantité du matériau actif de l'électrode négative (5), rapportée à sa surface, est d'au moins 10 mg/cm², de manière préférée d'au moins 20 mg/cm², de manière plus préférée d'au moins 40 mg/cm², de manière plus préférée d'au moins 60 mg/cm², de manière plus préférée d'au moins 80 mg/cm² et de manière particulièrement préférée d'au moins 100 mg/cm².

13. Cellule de batterie rechargeable selon l'une des revendications 1 à 12,
**caractérisée en ce que**
l'électrolyte à base de dioxyde de soufre contient au moins 1,5 mol de SO₂, 2 mol de SO₂, de manière préférée au moins 2,5 mol de SO₂, de manière plus préférée au moins 3 mol de SO₂, et de manière particulièrement préférée au moins 4 mol de S0₂ par mol de sel conducteur.

14. Cellule de batterie rechargeable selon l'une des revendications 1 à 13,
**caractérisée en ce que**
le sel conducteur est un aluminate, un halogénure, un oxalate, un borate, un phosphate, un arséniate ou un gallate d'un métal alcalin ou d'un métal alcalino-terreux, de manière préférée un lithiumtétrahalogénoaluminate, de manière particulièrement préférée un lithiumtétrachloroaluminate.

15. Cellule de batterie rechargeable selon l'une des revendications 1 à 14,
**caractérisée en ce que**
la batterie rechargeable comprend plusieurs électrodes négatives (5) et plusieurs électrodes positives (4) qui sont disposées en étant empilées en alternance dans le boîtier (1), chaque électrode positive (4) étant enveloppée par une enveloppe.
